# EUROPEAN PATENT SPECIFICATION

(11) **EP 4 293 781 B1**
(45) Date of publication and mention of the grant of the patent: **13.05.2026**
(21) Application number: 22752787.6
(22) Date of filing: 09.02.2022
(51) Int. Cl.: H01M 10/0567, H01M 10/052, H01M 10/0525

(54) **NONAQUEOUS ELECTROLYTIC SOLUTION AND NONAQUEOUS ELECTROLYTIC SOLUTION BATTERY**
NICHTWÄSSRIGE ELEKTROLYTLÖSUNG UND BATTERIE MIT NICHTWÄSSRIGER ELEKTROLYTLÖSUNG
SOLUTION ÉLECTROLYTIQUE NON AQUEUSE ET BATTERIE À SOLUTION ÉLECTROLYTIQUE NON AQUEUSE

(30) Priority: 10.02.2021 JP 2021020121
(43) Date of publication of application: 20.12.2023
(73) Proprietor: MU Ionic Solutions Corporation, Tokyo 100-8251 (JP)
(72) Inventor: NAKAZAWA, Eiji, Tokyo 100-8251 (JP); KAWAKAMI, Daisuke, Tokyo 100-8251 (JP)
(74) Representative: Vossius & Partner Patentanwälte Rechtsanwälte mbB
(86) International application number: PCT/JP2022/005161
(87) International publication number: WO 2022/172965

(56) References cited:
- WO-A1-2016/095116
- WO-A1-2016/095116
- JP-A- 2016 532 989
- JP-A- 2018 037 389
- JP-A- 2018 037 389
- JP-A- 2018 172 357
- JP-A- 2018 172 357
- KR-A- 20150 024 478
- KR-A- 20150 024 478

## Description

### TECHNICAL FIELD

The present invention relates to a nonaqueous electrolytic solution and a nonaqueous electrolytic solution battery, and specifically relates to a nonaqueous electrolytic solution containing a specific compound, and a nonaqueous electrolytic solution battery containing this nonaqueous electrolytic solution.

### BACKGROUND ART

Nonaqueous electrolytic solution batteries such as lithium secondary batteries are practically used in broad applications. Examples are power supplies for consumer small apparatuses including mobile phones, such as smartphones and laptop computers, on-vehicle power supplies for electric automobiles, and the like.

Many methods have been examined for improving the battery characteristics of nonaqueous electrolytic solution batteries in the field of active materials for positive and negative electrodes and the field of additives for nonaqueous electrolytic solutions.

For example, Patent Document 1 discloses examination for improving high-temperature cycle capacity retention and a change in thickness of a battery when stored at a high temperature by adding a cyclic sulfuric acid compound to a nonaqueous electrolytic solution comprising a lithium salt, a specific carbamate compound, and an organic solvent such as a carbonate.

Patent Document 2 discloses examination for improving the storage stability of a silyl group-containing compound, improving a cycle capacity retention at a high voltage of 4.9 V, and decreasing the gas generation amount while a battery is operating by adding a trialkylsilyl compound of a protonic acid having phosphorus atom and/or boron atom, a sulfonic acid, or a carboxylic acid and a basic compound or a specific silicon compound to a nonaqueous electrolytic solution.
Patent Document 3 discloses a specific non-aqueous electrolyte for a secondary battery, wherein the non-aqueous electrolyte comprises a non-aqueous solvent, a lithium salt, a sulfonate compound, and at least one auxiliary additive selected from an amide compound and an oxazolidine compound.

### RELATED ART DOCUMENTS

### PATENT DOCUMENTS

Patent Document 1: JP 2016-532989 T
Patent Document 2: WO 2015/098471
Patent Document 3: KR 10-2015-0024478 A

### SUMMARY OF THE INVENTION

### PROBLEM TO BE SOLVED BY THE INVENTION

Recently, an increase in capacity of the lithium battery has been accelerated in on-vehicle power supplies for electric automobiles, power supplies for mobile phones including smartphones, and the like, which leads to internal gap reductions from conventional batteries. For this reason, a large amount of gas generation amount in initial conditioning is a fatal defect.

An object of the present invention is to provide a nonaqueous electrolytic solution enabling a suppression in gas generation amount during initial conditioning of a nonaqueous electrolytic solution battery. Another object of the present invention is to provide a nonaqueous electrolytic solution battery in which the gas generation amount during initial conditioning is suppressed.

### MEANS FOR SOLVING PROBLEMS

The present inventor, who has conducted extensive research to solve the above problem, has conceived that generation of gas during initial conditioning is suppressed by using a nonaqueous electrolytic solution containing a compound represented by General Formula (A) and at least one of a compound represented by General Formula (α) and a compound represented by General Formula (β), and has completed the present invention.

The present invention is as defined in the appended claims.

### EFFECTS OF INVENTION

The present invention can provide a nonaqueous electrolytic solution enabling a significant suppression in gas generation amount during initial conditioning of a nonaqueous electrolytic solution battery, and a nonaqueous electrolytic solution battery in which the gas generation amount during initial conditioning is suppressed.

### DESCRIPTION OF EMBODIMENTS

Hereinafter, embodiments according to the present invention will be specifically described. The embodiments below are one examples (typical examples) of the present invention, and should not be construed as limitations to the present invention. Moreover, the present invention can be optionally modified and be implemented without departing from the scope of the appended claims.

### [First embodiment]

### <1-1. Nonaqueous electrolytic solution>

The nonaqueous electrolytic solution according to the present invention contains a compound represented by General Formula (A), and at least one of a compound represented by General Formula (α) and a compound represented by General Formula (β) described below.

Although the mechanism to suppress the gas generation amount by using such a nonaqueous electrolytic solution containing a compound represented by General Formula (A) and at least one of a compound represented by General Formula (α) and a compound represented by General Formula (β) is not clarified, it is inferred as below.

Because the compound represented by General Formula (A) has a cyclic structure having a polar structure (-SO₂-O-), the compound has higher permittivity than that of linear compounds. The compound represented by General Formula (α) also has a polar structure (-N-(C=O)-) in the molecule. For this reason, these compounds are allowed to interact with a surface functional group of a negative electrode active material such as carbon and/or the surface of a positive electrode active material such as a transition metal oxide, and tend to be localized near the active material(s). Further, it is inferred that the compounds (the compound represented by General Formula (A) and the compound represented by General Formula (α)) localized on the surface(s) of the active material(s) also interact with each other, thereby increasing the amount of the localized compounds fixed onto the surface of the positive electrode active material and/or the surface of the negative electrode active material. In particular, because the R-N-(C=O)-Y structure of the compound represented by General Formula (α) is highly adsorptive onto the electrode surface(s), fixing of the compound represented by General Formula (A) onto the electrode(s) is promoted from fixing of the compound represented by General Formula (α) onto the electrode(s). Thereby, the compound represented by General Formula (α) and the compound represented by General Formula (A) localized on the electrode(s) during initial charge are electrochemically decomposed to form a composite insulating coating film. It is also considered that the formation of the composite coating film efficiently progresses because a ring-opening reaction suitably progresses in the reaction of the compound represented by General Formula (A). It is inferred that the composite coating film suppresses side reactions of the electrolytic solution during the initial conditioning, and thus suppresses gas generation.

Further, because the compound represented by General Formula (A) has a cyclic structure having a polar structure (-SO₂-O-), the compound has a permittivity higher than those of linear compounds. For this reason, the compound represented by General Formula (A) is allowed to interact with the surface of a negative electrode active material such as carbon and/or the surface of a positive electrode active material such as a transition metal oxide, and tends to be localized near the surface(s) thereof. The compound represented by General Formula (β) has an unsaturated bond having π electrons in the molecule and has a nonpolar structure (-SiR²¹R²²R¹¹). Generally, because the silicon atom has a broad electron cloud and has no steric hindrance in formation of a bond, the silicon atom easily forms a bond with a π electron or an unpaired electron via its empty d orbital. For this reason, interaction of the compound represented by General Formula (A) localized on the surface(s) of the active material(s) with the compound represented by General Formula (β) promotes fixing of these compounds onto the electrode(s). Thereby, the compound represented by General Formula (β) and the compound represented by General Formula (A) are electrochemically decomposed during initial charge to form a composite insulating coating film. It is inferred that the composite coating film suppresses side reactions of the electrolytic solution during initial conditioning, and thus suppresses gas generation.

### <1-1-1. Compound represented by General Formula (A)>

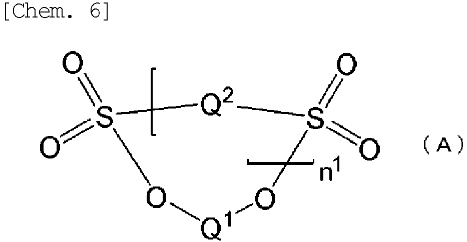

where in General Formula (A), Q¹ and Q² each independently represent a C₁ to C₁₀ alkylene group which may have a substituent; n¹ represents an integer of 0 or 1; and when n¹ is 0, the sulfur atom and the oxygen atom form a direct bond.

In General Formula (A), Q¹ and Q² each independently represent a C₁ to C₁₀ alkylene group which may have a substituent.

Q¹ where n¹ is 0 is preferably a C₁ to C₅ alkylene group which may have a substituent, more preferably a C₁ to C₃ alkylene group which may have a substituent, particularly preferably a C₂ to C₃ alkylene group which may have a substituent.

Q¹ where n¹ is 1 is preferably a C₁ to C₅ alkylene group which may have a substituent, more preferably a C₁ to C₃ alkylene group which may have a substituent, particularly preferably a methylene group which may have a substituent.

Q² is preferably a C₁ to C₅ alkylene group which may have a substituent, more preferably a C₁ to C₃ alkylene group which may have a substituent, particularly preferably a methylene group which may have a substituent.

When the alkylene group has a substituent, carbon atoms contained in the substituent are not counted as the number of carbon atoms of the alkylene group.

Specific examples of alkylene groups include a methylene group, an ethylene group, an n-propylene group, a butylene group, a hexylene group, and the like.

Here, examples of the substituent include C₁ to C₁₀ hydrocarbon groups, a cyano group, an isocyanato group, acyl groups (-(C=O)-R^{a}), acyloxy groups (-O(C=O)-R^{a}), alkoxycarbonyl groups (-(C=O)O-R^{a}), sulfonyl groups (-SO₂-R^{a}), sulfonyloxy groups (-O(SO₂)-R^{a}), alkoxysulfonyl groups (-(SO₂)-O-R^{a}), alkoxysulfonyloxy groups (-O-(SO₂)-O-R^{a}), alkoxycarbonyloxy groups (-O-(C=O)-O-R^{a}), alkoxy groups (-O-R^{a}), halogen atoms (preferably, a fluorine atom), a trifluoromethyl group, and the like. R^{a} represents a C₁ to C₁₀ alkyl group, a C₁ to C₁₀ alkylene group, a C₂ to C₁₀ alkenyl group, or a C₂ to C₁₀ alkynyl group. When R^{a} is an alkylene group, the alkylene group may be bonded to its substituting hydrocarbon group to form a ring.

Among these substituents, preferred are C₁ to C₁₀ hydrocarbon groups, a cyano group, an isocyanato group, acyloxy groups (-O(C=O)-R^{a}), alkoxycarbonyl groups (-(C=O)O-R^{a}), sulfonyloxy groups (-O(SO₂)-R^{a}), halogen atoms (preferably, a fluorine atom), and a trifluoromethyl group, more preferred are C₁ to C₁₀ hydrocarbon groups, an isocyanato group, alkoxycarbonyl groups (-(C=O)O-R^{a}), sulfonyloxy groups (-O(SO₂)-R^{a}), acyloxy groups (-O(C=O)-R^{a}), halogen atoms (preferably, a fluorine atom), and a trifluoromethyl group, and particularly preferred are C₁ to C₁₀ hydrocarbon groups, alkoxycarbonyl groups (-(C=O)O-R^{a}), sulfonyloxy groups (-O(SO₂)-R^{a}), halogen atoms (preferably, a fluorine atom), and a trifluoromethyl group.

Specific examples of C₁ to C₁₀ hydrocarbon groups include C₁ to C₁₀ alkyl groups, C₁ to C₁₀ alkenyl groups, C₁ to C₁₀ alkynyl groups, C₆ to C₁₀ aryl groups, and C₇ to C₁₀ aralkyl groups.

Specific examples of the alkyl groups include a methyl group, an ethyl group, an n-propyl group, an iso-propyl group, an n-butyl group, a tert-butyl group, an n-pentyl group, a hexyl group, a heptyl group, an octyl group, a nonyl group, a decyl group, a cyclohexyl group, and the like. Among these, preferred are a methyl group, an ethyl group, an n-propyl group, an n-butyl group, a tert-butyl group, an n-pentyl group, a hexyl group, and a cyclohexyl group, more preferred are a methyl group, an ethyl group, an n-propyl group, an n-butyl group, a tert-butyl group, an n-pentyl group, and a cyclohexyl group, and particularly preferred are a methyl group, an ethyl group, an n-butyl group, a tert-butyl group, and a cyclohexyl group.

Specific examples of the alkenyl groups include a vinyl group, an allyl group, a methallyl group, a 2-butenyl group, a 3-methyl-2-butenyl group, a 3-butenyl group, a 4-pentenyl group, and the like. Among these, preferred are a vinyl group, an allyl group, a methallyl group, and a 2-butenyl group, still more preferred are a vinyl group, an allyl group, and a methallyl group, and particularly preferred is a vinyl group or an allyl group.

Specific examples of the alkynyl groups include an ethynyl group, a 2-propynyl group, a 2-butynyl group, a 3-butynyl group, a 4-pentynyl group, a 5-hexynyl group, and the like. Among these, preferred are an ethynyl group, a 2-propynyl group, a 2-butynyl group, and a 3-butynyl group, more preferred are a 2-propynyl group and a 3-butynyl group, and particularly preferred is a 2-propynyl group.

Specific examples of the aryl groups include a phenyl group, a tolyl group, and the like. Among these, preferred is a phenyl group.

Specific examples of the aralkyl groups include a benzyl group, a phenethyl group, and the like.

Specific examples of the alkoxycarbonyl groups (-(C=O)O-R^{a}) include - (C=O)O-CH₃, -(C=O)O-CH₂CH₃, and the like.

Specific examples of the sulfonyloxy groups (-O(SO₂)-R^{a}) include - O(SO₂)-CH₃, -O(SO₂)-CH₂CH₃, and the like.

Specific examples of the compound represented by General Formula (A) include the compounds below.

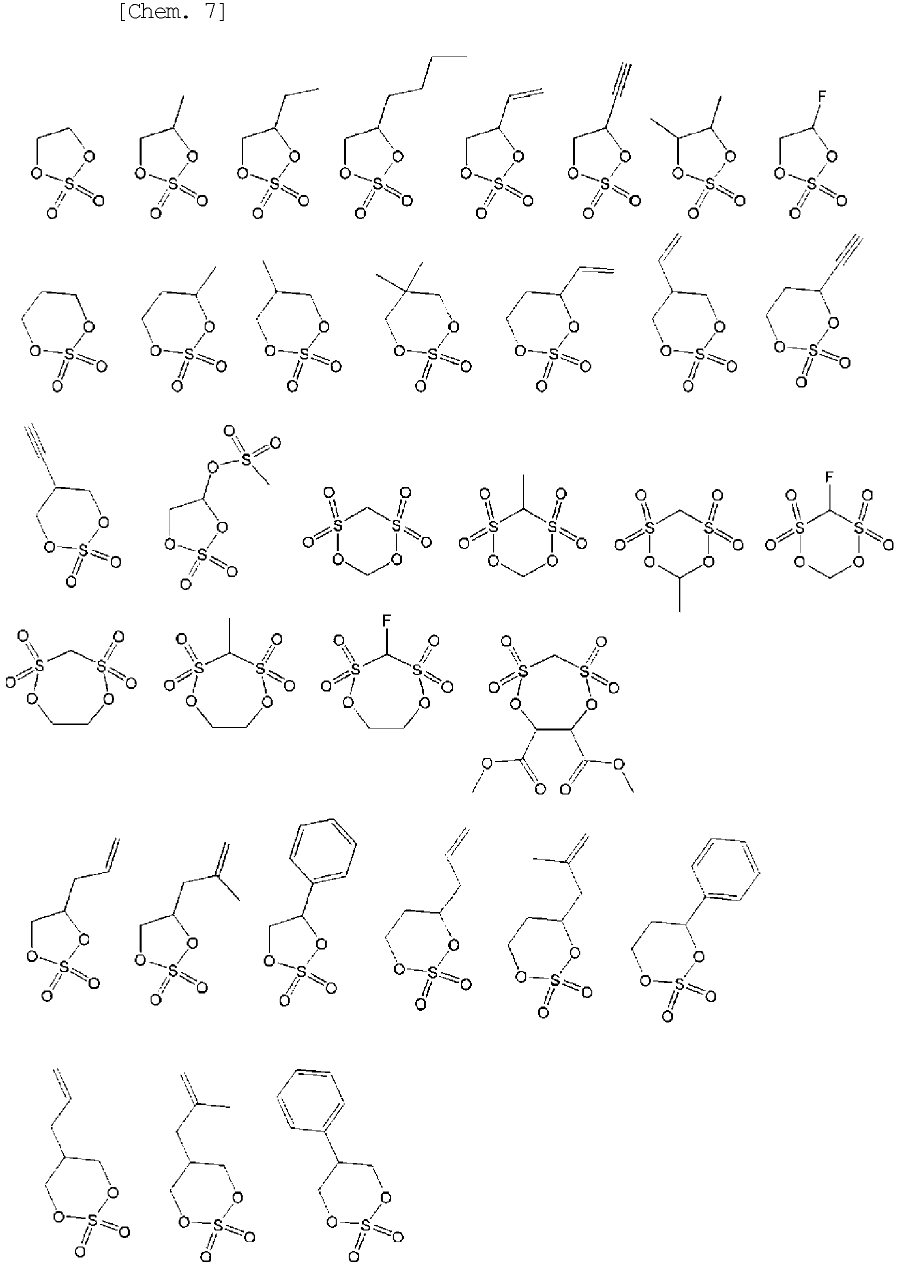

Preferred are compounds below:

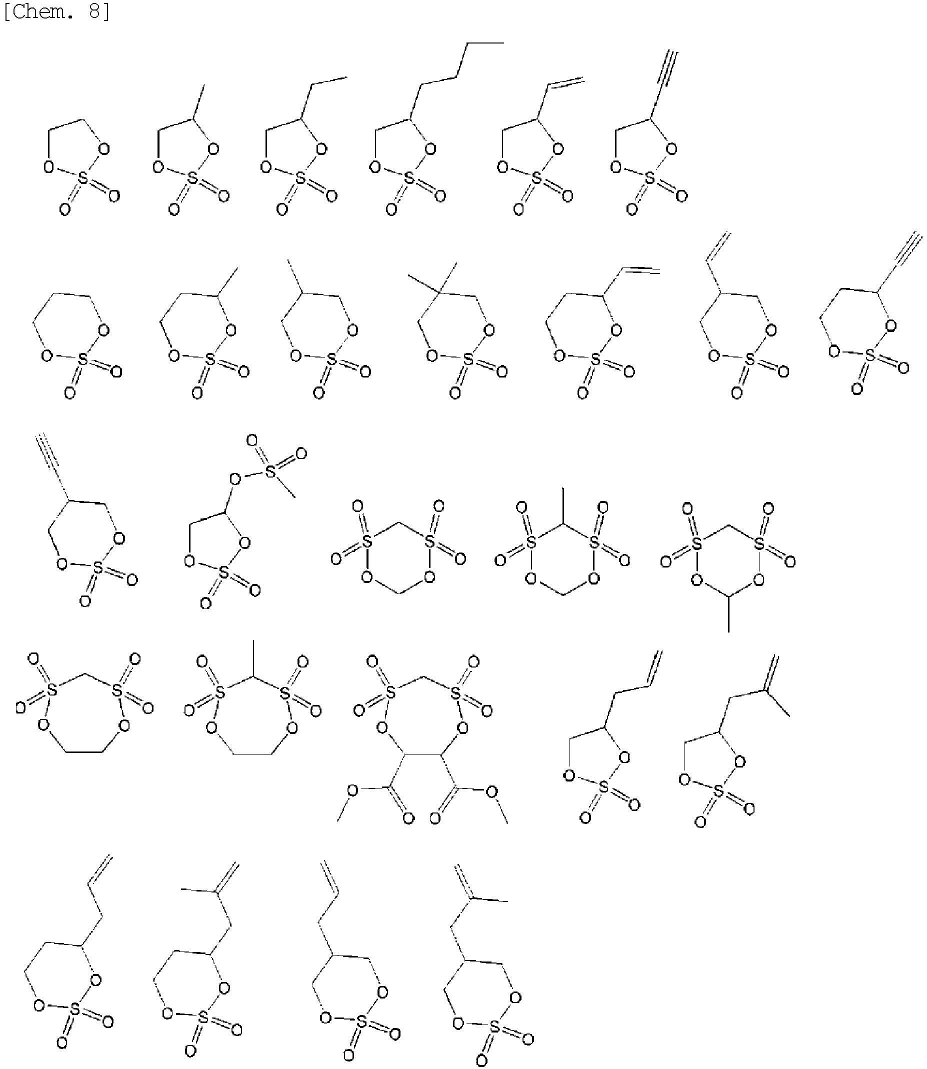

More preferred are compounds below:

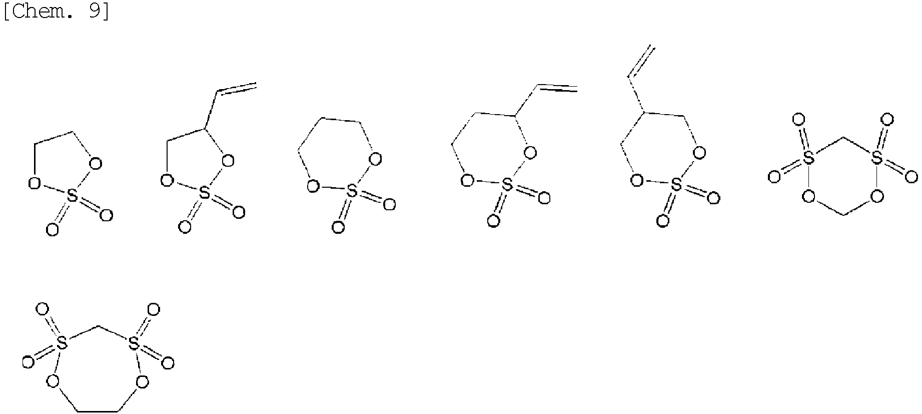

Particularly preferred are compounds below:

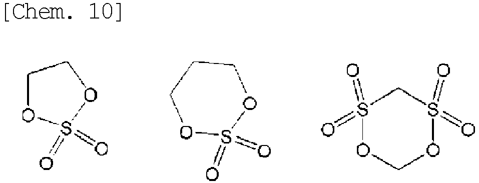

These compounds represented by General Formula (A) may be used alone or in combination.

The content of the compound represented by General Formula (A) (the total content if two or more compounds are present) relative to the total amount of the nonaqueous electrolytic solution according to one embodiment of the present invention is usually 1.0 × 10⁻³% by mass or more, preferably 1.0 × 10⁻²% by mass or more, more preferably 0.1% by mass or more, and is usually 10% by mass or less, preferably 5% by mass or less, more preferably 3% by mass or less, still more preferably 2% by mass or less, particularly preferably 1% by mass or less.

When the content of the compound represented by General Formula (A) relative to the total amount of the nonaqueous electrolytic solution falls within the above ranges, a battery can be prepared in which condensation of the compound to the active material(s) suitably progresses and gas generation is further suppressed during the initial conditioning.

### <1-1-2. Compound represented by General Formula (α)>

The nonaqueous electrolytic solution according to one embodiment of the present invention contains a compound represented by General Formula (α), wherein the compound represented by General Formula (α) is at least one compound selected from the group consisting of compounds represented by formulas (α1) to (α15): 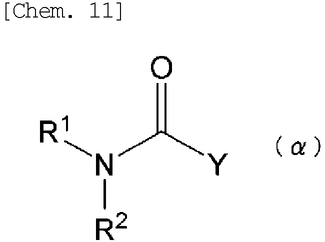 where in General Formula (α), R¹ and R² each independently represent a hydrogen atom, a C₁ to C₁₂ hydrocarbon group, or a silyl group represented by -SiR³R⁴R⁵; R³ to R⁵ each independently represent a hydrogen atom, a halogen atom, a C₁ to C₁₂ hydrocarbon group which may have a substituent, or a C₁ to C₁₂ alkoxy group which may have a substituent; Y represents a hydrogen atom, a halogen atom, a C₁ to C₁₂ hydrocarbon group which may have a substituent, a group represented by -NR⁶-SiR⁷R⁸R⁹, or a group represented by -NR¹⁰-R¹¹; R⁶, R¹⁰, and R¹¹ each independently represent a hydrogen atom or a C₁ to C₁₂ hydrocarbon group which may have a substituent; R⁷ to R⁹ each independently represent a hydrogen atom, a halogen atom, a C₁ to C₁₂ hydrocarbon group which may have a substituent or a C₁ to C₁₂ alkoxy group which may have a substituent; and R¹ or R² and Y may be bonded to each other to form a ring.

Hereinafter, R¹ to R¹¹, Y, and the like will be described.

R¹ and R² in General Formula (α) each independently represent a hydrogen atom, a C₁ to C₁₂ hydrocarbon group, or a silyl group represented by -SiR³R⁴R⁵, and R³ to R⁵ each independently represent a hydrogen atom, a halogen atom, a C₁ to C₁₂ hydrocarbon group which may have a substituent, or a C₁ to C₁₂ alkoxy group which may have a substituent.

In the silyl group represented by -SiR³R⁴R⁵, R³ to R⁵ each independently represent a hydrogen atom, a halogen atom, a C₁ to C₁₂ hydrocarbon group which may have a substituent, or a C₁ to C₁₂ alkoxy group which may have a substituent. Among these, preferred are C₁ to C₁₂ hydrocarbon groups which may have a substituent and C₁ to C₁₂ alkoxy groups which may have a substituent, and particularly preferred are C₁ to C₁₂ hydrocarbon groups which may have a substituent. When the hydrocarbon group has a substituent, carbon atoms contained in the substituent are not counted as the number of carbon atoms of the hydrocarbon group.

At least one of R³ to R⁵ is preferably a C₁ to C₁₂ alkyl group because the compound represented by General Formula (α) tends to be suitably localized on the surface(s) of the electrode(s). Particularly preferably, all of R³ to R⁵ are C₁ to C₁₂ alkyl groups.

Although R³ to R⁵ in General Formula (α) may be the same or different, for ease of synthesis of the compound, it is preferred that at least two or more of them be the same, and it is more preferred that all of them be the same.

Examples of halogen atoms include a fluorine atom, a chlorine atom, a bromine atom, and the like. Preferred is a fluorine atom because of few electrochemical side reactions.

As the C₁ to C₁₂ hydrocarbon group, preferred are C₁ to C₆ hydrocarbon groups, and particularly preferred are C₁ to C₄ hydrocarbon groups.

Specific examples of such hydrocarbon groups include alkyl groups, alkenyl groups, alkynyl groups, aralkyl groups, and aryl groups.

Specific examples of alkyl groups include linear alkyl groups such as a methyl group, an ethyl group, an n-propyl group, an iso-propyl group, an n-butyl group, a tert-butyl group, an n-pentyl group, a hexyl group, a heptyl group, an octyl group, a nonyl group, and a decyl group; and cyclic alkyl groups such as a cyclobutyl group, a cyclopentyl group, a cyclohexyl group, and a cycloheptyl group. Among these, preferred are a methyl group, an ethyl group, an n-propyl group, an n-butyl group, a tert-butyl group, an n-pentyl group, a hexyl group, and a cyclohexyl group, more preferred are a methyl group, an ethyl group, an n-propyl group, an n-butyl group, a tert-butyl group, an n-pentyl group, and a cyclohexyl group, and particularly preferred are a methyl group, an ethyl group, an n-butyl group, a tert-butyl group, and a cyclohexyl group. The above-mentioned alkyl groups are preferred because the compound represented by General Formula (α) tends to be localized near the surface(s) of the positive electrode active material and/or the negative electrode active material.

Specific examples of alkenyl groups include a vinyl group, an allyl group, a methallyl group, a 2-butenyl group, a 3-methyl-2-butenyl group, a 3-butenyl group, a 4-pentenyl group, and the like. Among these, preferred are a vinyl group, an allyl group, a methallyl group, and a 2-butenyl group, more preferred are a vinyl group, an allyl group, a methallyl group, and particularly preferred is a vinyl group or an allyl group. The above-mentioned alkenyl groups are preferred because the compound represented by General Formula (α) tends to be localized near the surface(s) of the positive electrode active material and/or the negative electrode active material.

Specific examples of alkynyl groups include an ethynyl group, a 2-propynyl group, a 2-butynyl group, a 3-butynyl group, a 4-pentynyl group, a 5-hexynyl group, and the like. Among these, preferred are an ethynyl group, a 2-propynyl group, a 2-butynyl group, and a 3-butynyl group, more preferred are a 2-propynyl group, a 3-butynyl group, and particularly preferred is a 2-propynyl group. The above-mentioned alkynyl groups are preferred because the compound represented by General Formula (α) tends to be localized near the surface(s) of the positive electrode active material and/or the negative electrode active material.

Specific examples of aryl groups include a phenyl group, a tolyl group, and the like. Among these, preferred is a phenyl group because the compound represented by General Formula (α) tends to be localized near the surface(s) of the positive electrode active material and/or the negative electrode active material.

Specific examples of aralkyl groups include a benzyl group, a phenethyl group, and the like.

As the C₁ to C₁₂ alkoxy group, preferred are C₁ to C₆ alkoxy groups, and particularly preferred are C₁ to C₄ alkoxy groups.

Specific examples of the C₁ to C₁₂ alkoxy group include a methoxy group, an ethoxy group, a propoxy group, a butoxy group, an isopropoxy group, and the like. Among these, preferred are a methoxy group and an ethoxy group because these cause little steric hindrance and thus allow suitable concentration on the surface(s) of the active material(s).

Here, examples of the substituent include a cyano group, an isocyanato group, an oxo group (=O), acyl groups (-(C=O)-R^{b}), acyloxy groups (-O(C=O)-R^{b}), alkoxycarbonyl groups (-(C=O)O-R^{b}), sulfonyl groups (-SO₂-R^{b}), sulfonyloxy groups (-O(SO₂)-R^{b}), alkoxysulfonyl groups (-(SO₂)-OR^{b}), alkoxysulfonyloxy groups (-O-(SO₂)-O-R^{b}), alkoxycarbonyloxy groups (-O-(C=O)-O-R^{b}), alkoxy groups (-O-R^{b}), an acrylic group, a methacrylic group, halogen atoms (preferably, a fluorine atom), a trifluoromethyl group, and the like. R^{b} represents a C₁ to C₁₀ alkyl group, a C₁ to C₁₀ alkylene group, a C₂ to C₁₀ alkenyl group, or a C₂ to C₁₀ alkynyl group. When R^{b} is an alkylene group, the alkylene group may be bonded to its substituting hydrocarbon group to form a ring.

Among these substituents, preferred are a cyano group, an isocyanato group, an oxo group (=O), acyloxy groups (-O(C=O)-R^{b}), halogen atoms (preferably, a fluorine atom), and a trifluoromethyl group, more preferred are an oxo group (=O), an isocyanato group, acyloxy groups (-O(C=O)-R^{b}), halogen atoms (preferably, a fluorine atom), and a trifluoromethyl group, and particularly preferred are an oxo group (=O), acyloxy groups (-O(C=O)-R^{b}), halogen atoms (preferably, a fluorine atom), and a trifluoromethyl group.

Specific examples of the group represented by -SiR³R⁴R⁵ include - Si(CH₃)₃, -Si(CH₃)₂(C₂H₅), -Si(CH₃)₂(CH=CE₂), -Si(CH₃)₂(CH₂CH₂CH₃), - Si(CH₃)₂(CH₂CH=CH₂), -Si(CH₃)₂[CH(CH₃)₂], -Si(CH₃)₂[(CH₂)₃CH₃], - Si(CH₃)₂[CH₂CH(CH₃)₂], -Si(CH₃)₂[C(CH₃)₃], -Si(CH₃)₂(C₆H₅), -Si(CH₃)(C₆H₅)₂, - Si(C₆H₅)₃, -Si(C₂H₅)₃, -Si(CH=CH₂)₃, -Si(CH₂CH₂CH₃)₃, -Si[CH(CH₃)₂]₃, - Si(CH₂CH=CH₂)₃, -Si(CH₃)(C₆H₅)(CH=CH₂), -Si(C₆H₅)₂(CH=CH₂), -Si(CF₃)₃, and the like. Among these, preferred are -Si(CH₃)₃, -Si(CH₃)₂(CH=CH₂), - Si(CH₃)₂(CH₂CH=CH₂), -Si(C₂H₅)₃, -Si(CH₃)(C₆H₅)(CH=CH₂), and -Si(C₆H₅)₂(CH=CH₂), and particularly preferred are -Si(CH₃)₂(CH=CH₂)and -Si(CH₃)₂(CH₂CH=CH₂).

Y in General Formula (α) represents a hydrogen atom, a halogen atom, a C₁ to C₁₂ hydrocarbon group which may have a substituent, a group represented by -NR⁶-SiR⁷R⁸R⁹, or a group represented by -NR¹⁰-R¹¹, where R⁶, R¹⁰, and R¹¹ each independently represent a hydrogen atom or a C₁ to C₁₂ hydrocarbon group which may have a substituent, R⁷ to R⁹ each independently represent a hydrogen atom, a halogen atom, a C₁ to C₁₂ hydrocarbon group which may have a substituent, or a C₁ to C₁₂ alkoxy group which may have a substituent. Among these, preferred is a group represented by -NR⁶-SiR⁷R⁸R⁹ or a group represented by -NR¹⁰-R¹¹ because these more suitably interact with the compound represented by General Formula (A).

Here, the same descriptions as those defined for R³ to R⁵ are applied to the halogen atom and the C₁ to C₁₂ hydrocarbon group which may have a substituent.

In the group represented by -NR⁶-SiR⁷RPR⁹, R⁶ is a hydrogen atom or a C₁ to C₁₂ hydrocarbon group which may have a substituent, where the same description and preferred examples as those for R¹ are applied to the C₁ to C₁₂ hydrocarbon group which may have a substituent. The same description and preferred examples as those for the group represented by -SiR³R⁴R⁵ are applied to the group represented by -SiR⁷R⁸R⁹.

In the group represented by -NR¹⁰-R¹¹, R¹⁰ and R¹¹ each independently represent a hydrogen atom or a C₁ to C₁₂ hydrocarbon group which may have a substituent. Here, the same description and preferred examples as those for R¹ are applied to the C₁ to C₁₂ hydrocarbon group which may have a substituent.

Specific examples of the compound represented by General Formula (α) include:

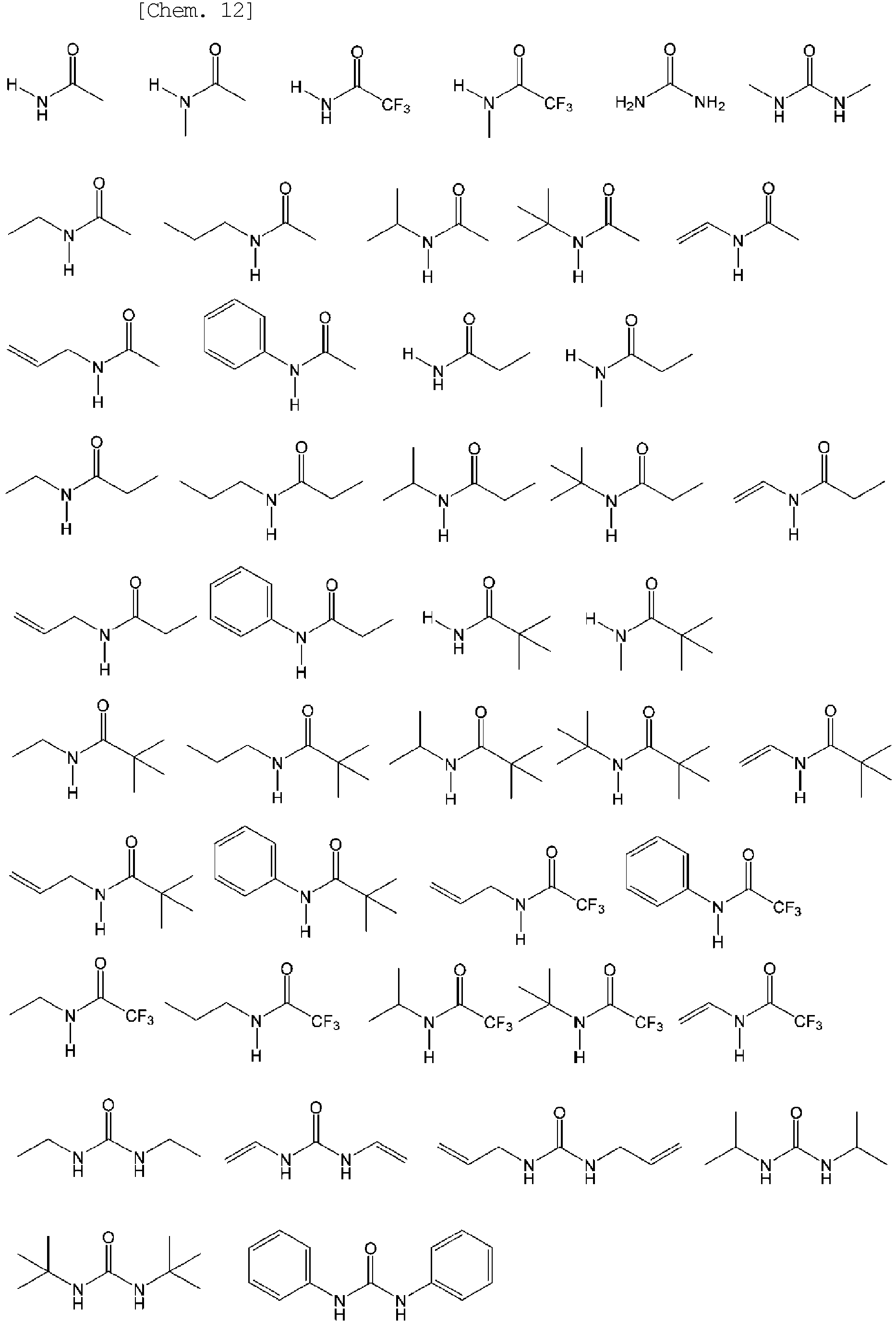

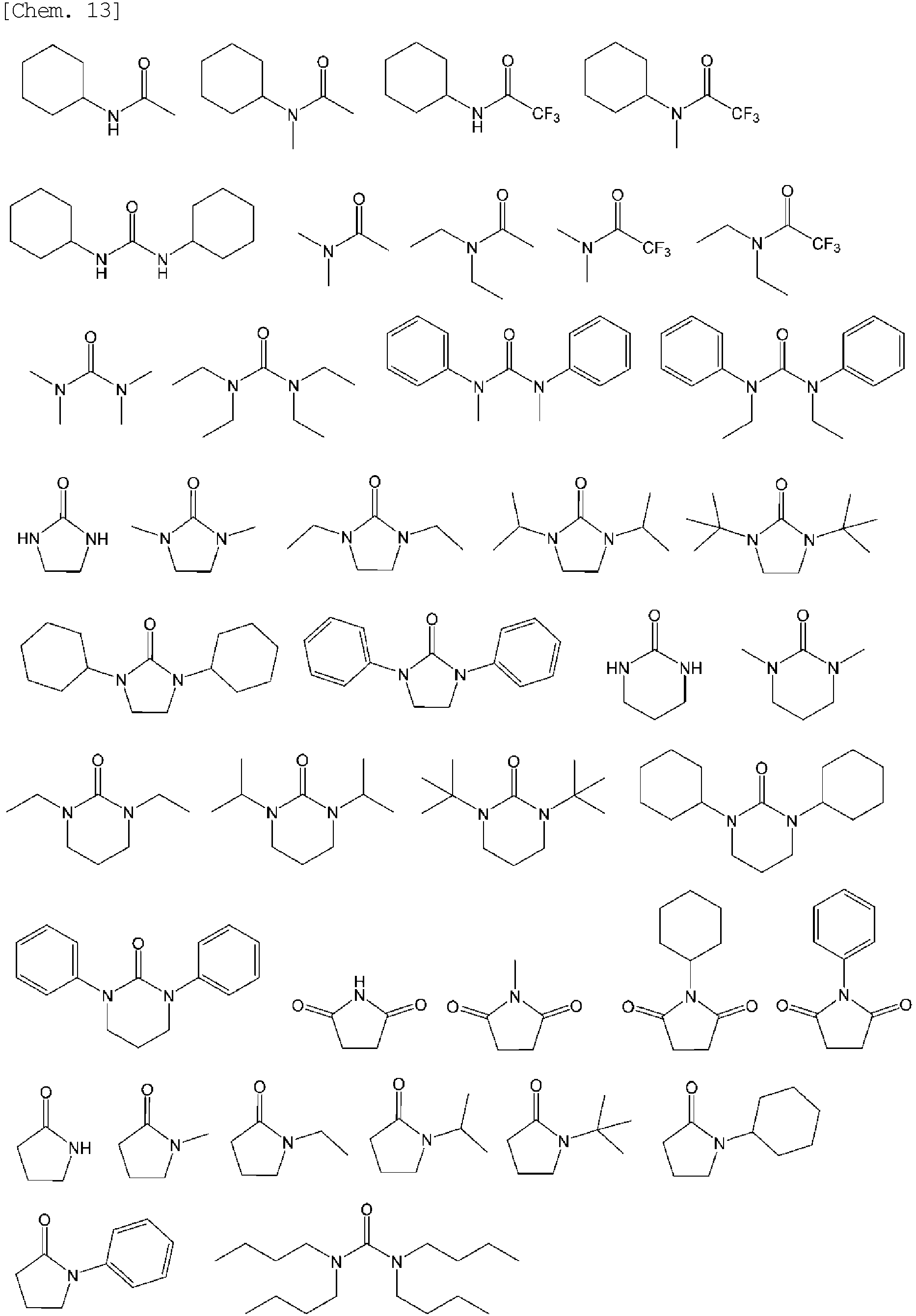

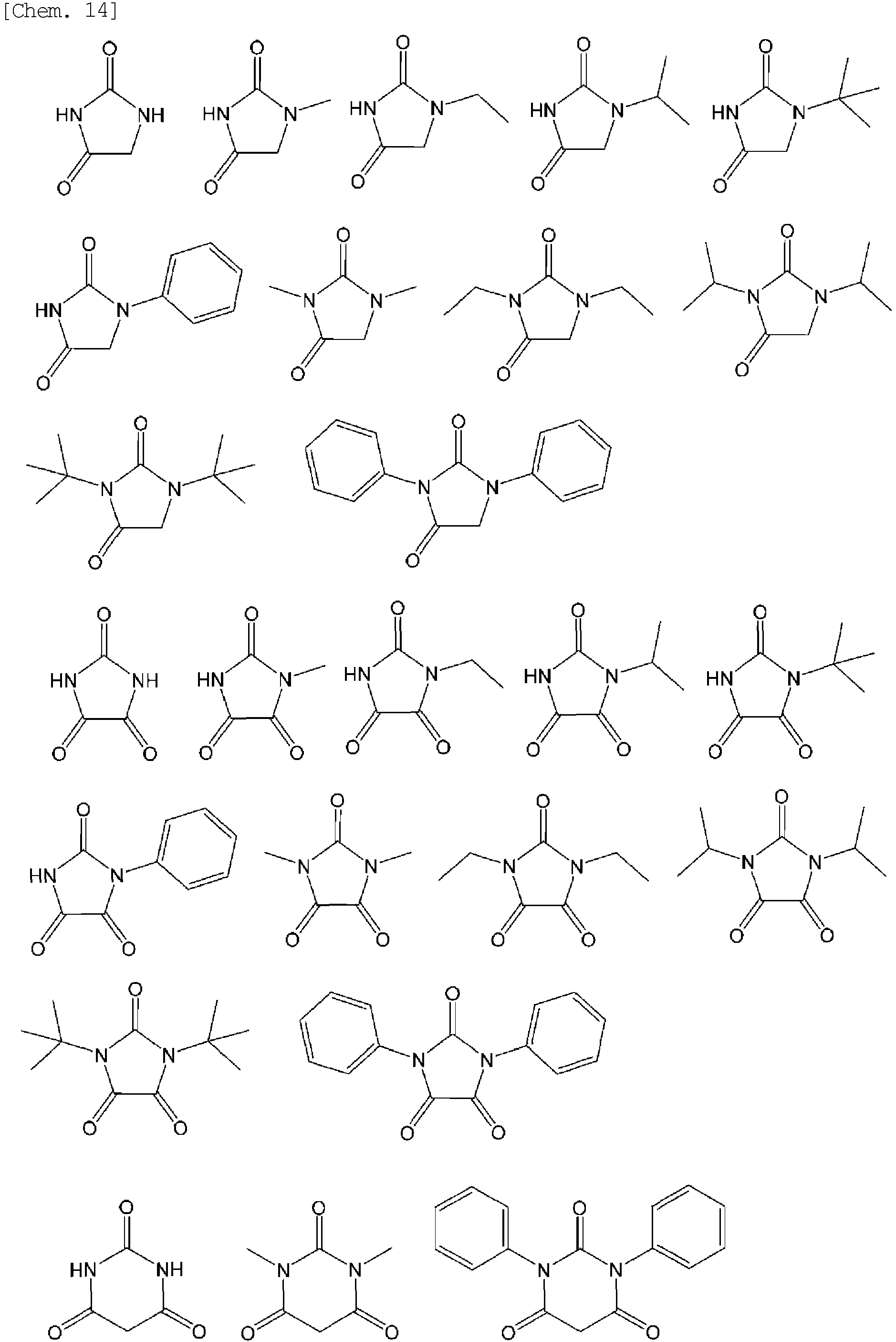

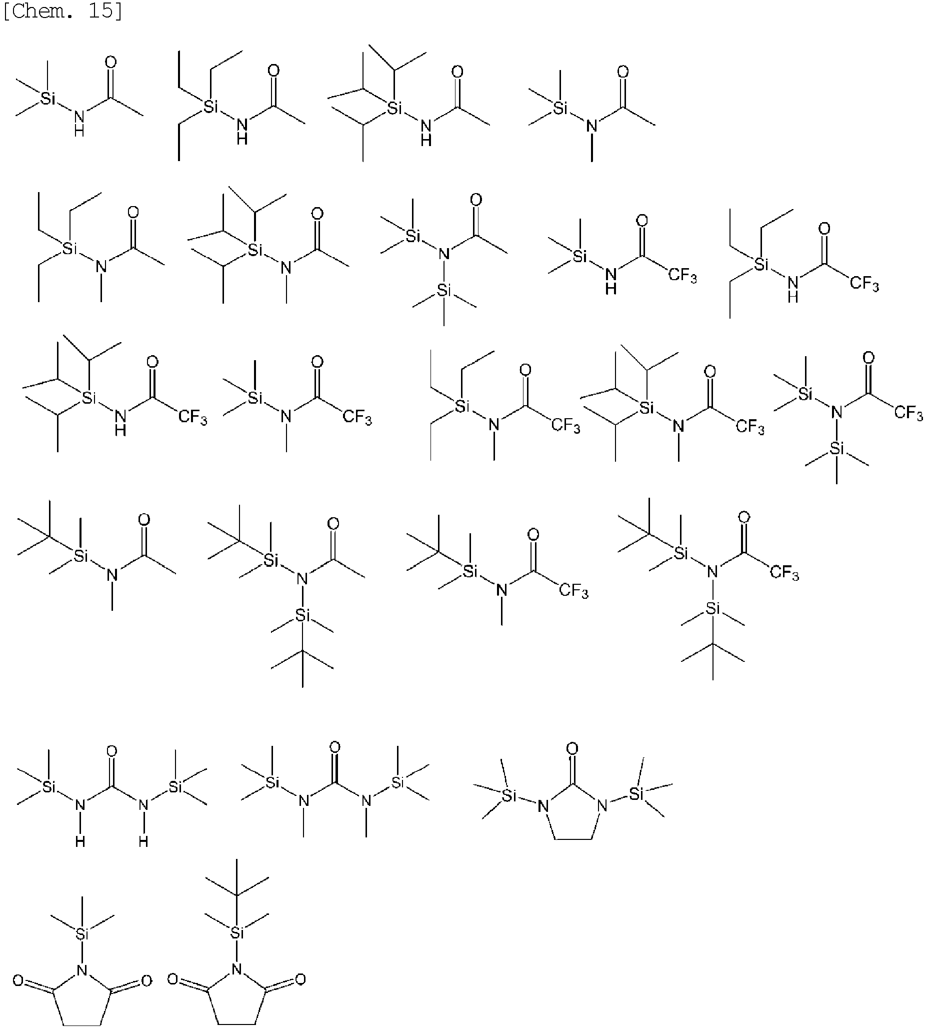

Preferred examples thereof include compounds shown below:

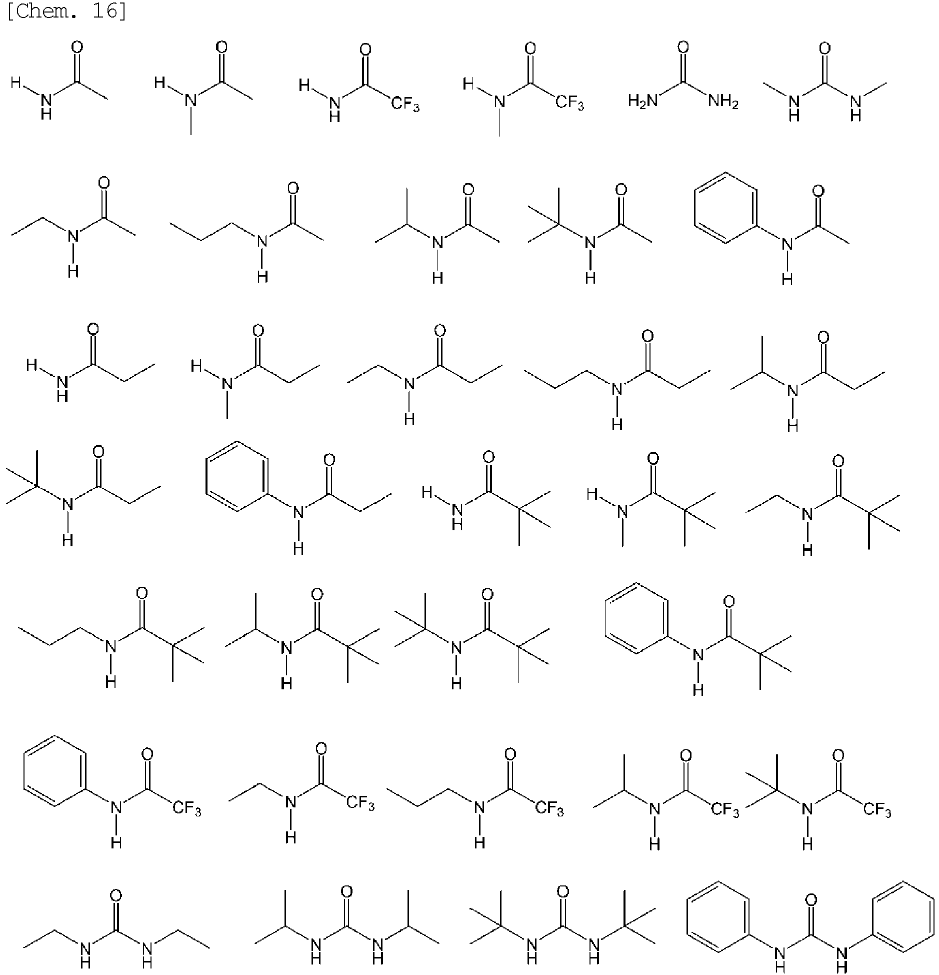

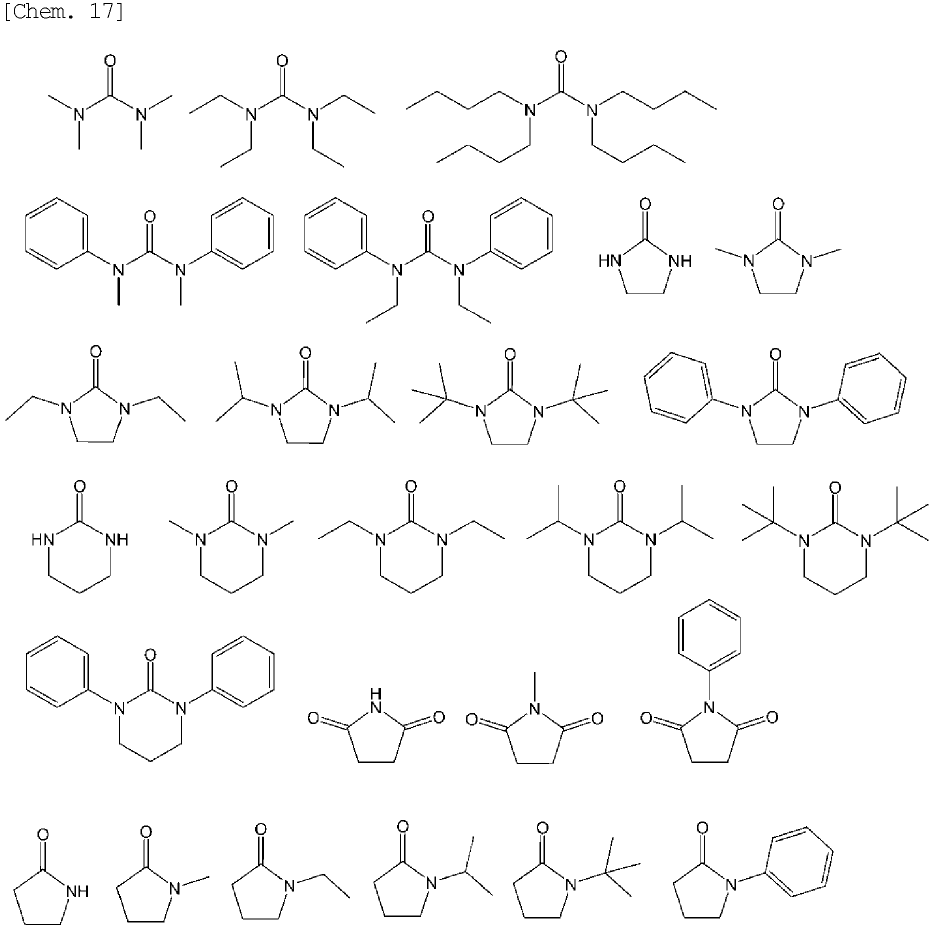

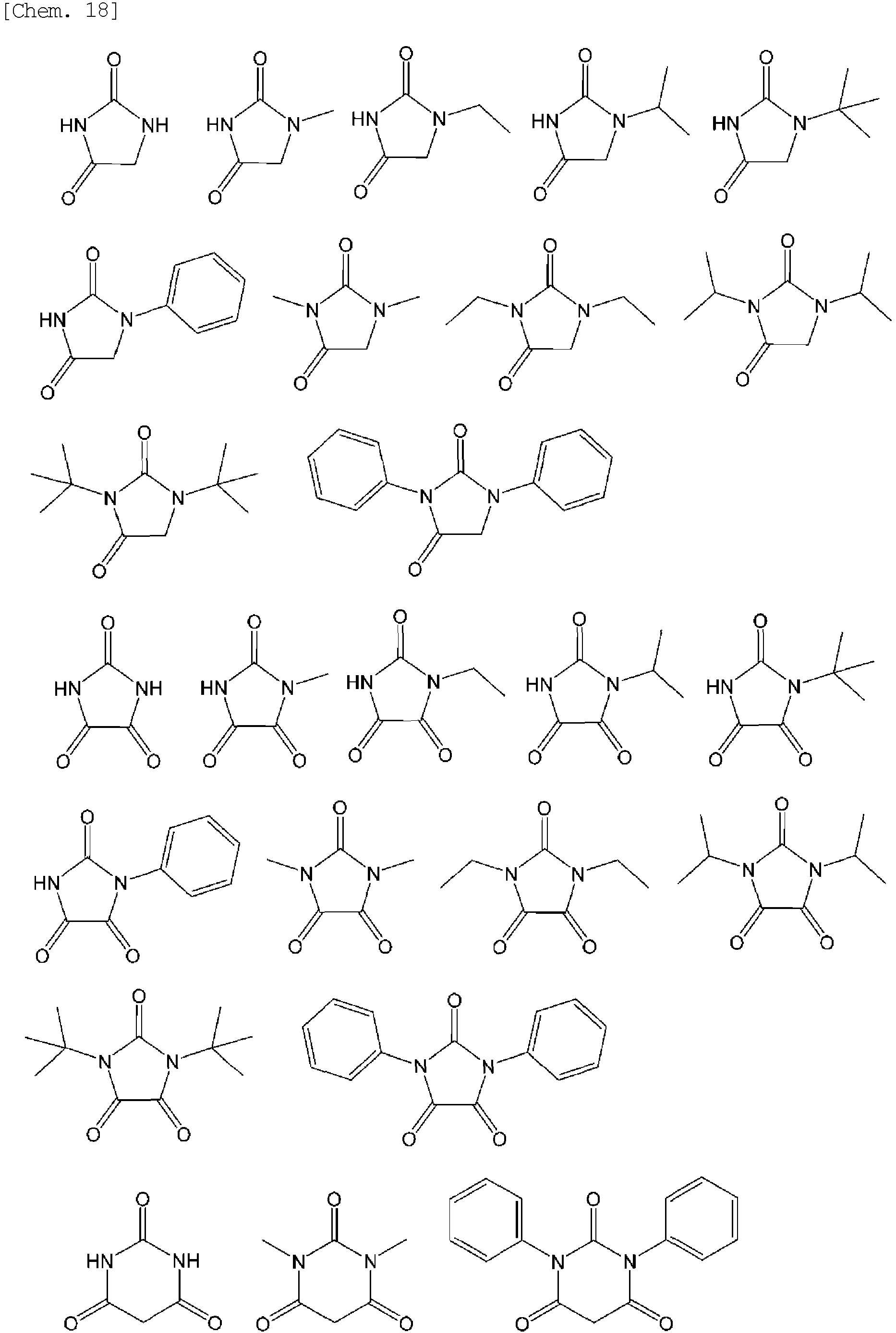

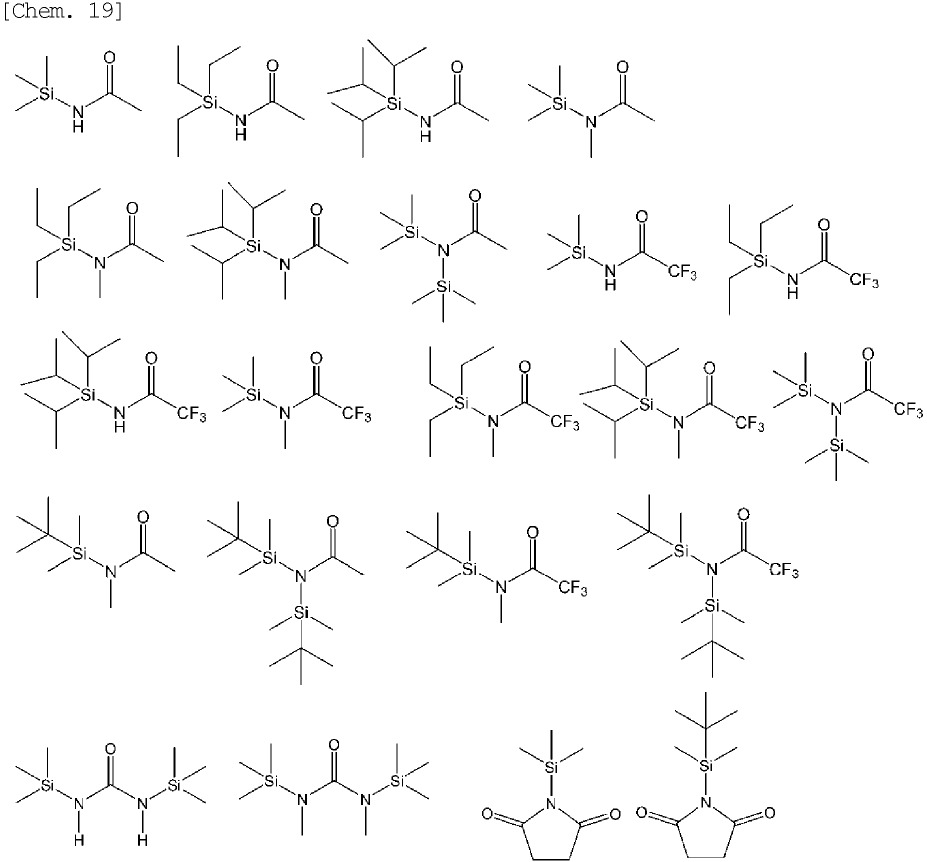

More preferred examples thereof include compounds shown below:

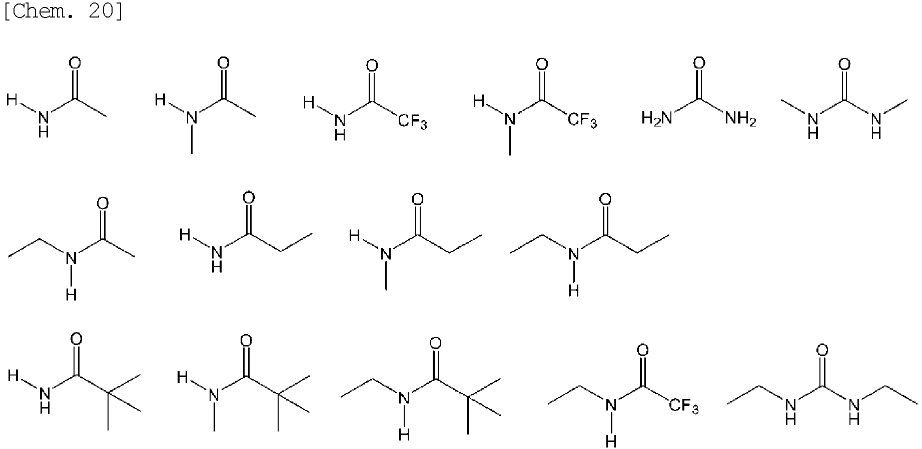

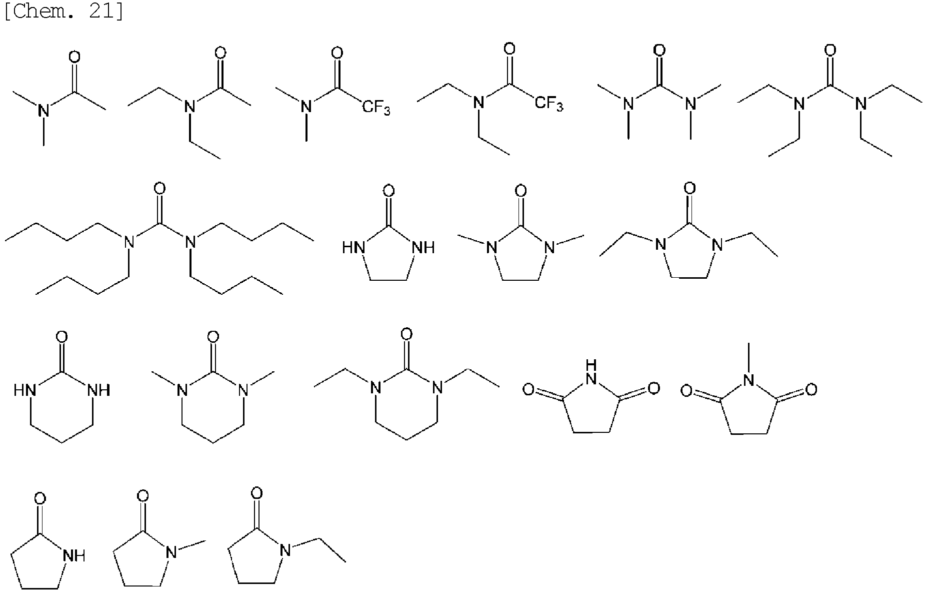

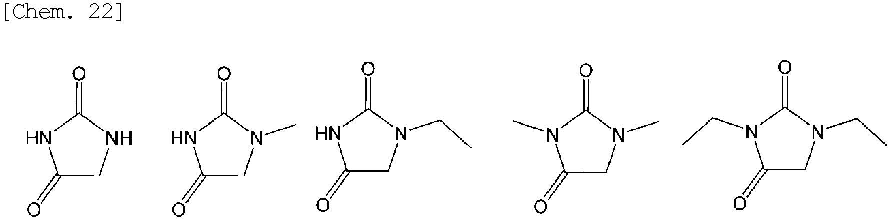

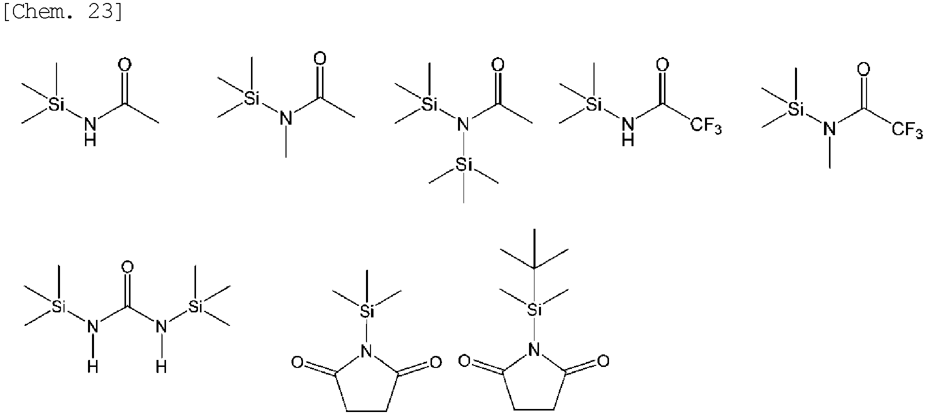

In the present invention, the compound represented by General Formula (α) is at least one compound selected from the group consisting of compounds represented by formulas (α1) to (α15) shown below:

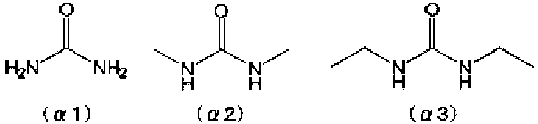

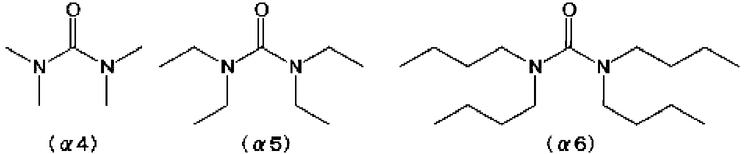

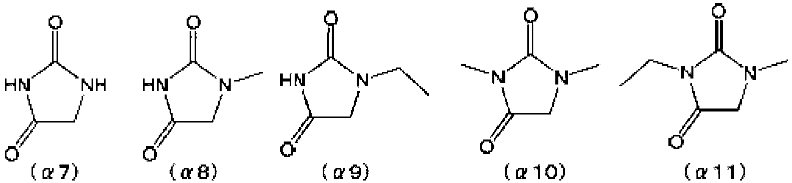

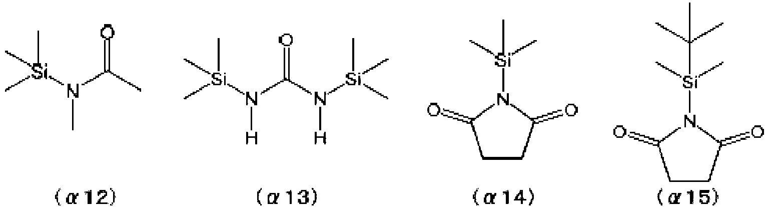

These compounds represented by General Formula (α) may be used alone or in combination.

The content of the compound represented by General Formula (α) (the total content if two or more compounds are present) relative to the total amount of the nonaqueous electrolytic solution according to one embodiment of the present invention, although not particularly limited, is preferably 0.01 mass ppm or more, more preferably 0.1 mass ppm or more, still more preferably 1.0 mass ppm or more, particularly preferably 10 mass ppm or more, and is preferably 1.0% by mass or less, more preferably 0.75% by mass or less, still more preferably 0.5% by mass or less, particularly preferably 0.3% by mass or less.

When the content of the compound represented by General Formula (α) relative to the total amount of the nonaqueous electrolytic solution falls within the above ranges, a battery can be prepared in which condensation of the compound to the active material(s) suitably progresses and gas generation during initial conditioning is further suppressed.

Although the mass ratio of the content of the compound represented by General Formula (A) to the content of the compound represented by General Formula (α) (content of the compound represented by General Formula (A)/content of the compound represented by General Formula (α)) in the nonaqueous electrolytic solution is not particularly limited, the mass ratio is usually 1.0 or more, preferably 2.0 or more, and usually 1.0 × 10⁴ or less, preferably 7.0 × 10³ or less, more preferably 4.0 × 10³ or less, still more preferably 2.0 × 10³ or less, further still more preferably 1.0 × 10³ or less, particularly preferably 5.0 × 10² or less.

### <1-1-3. Compound represented by General Formula (β)>

The nonaqueous electrolytic solution according to one embodiment of the present invention contains an unsaturated silane compound represented by General Formula (β).

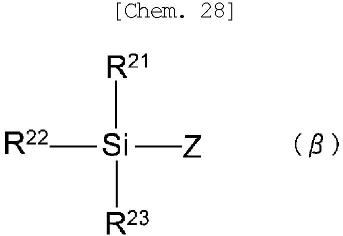

In General Formula (β), R²² to R²³ each independently represent a hydrogen atom, a C₁ to C₁₀ alkyl group which may have a substituent, a C₆ to C₁₈ aryl group, or a C₇ to C₁₈ aralkyl group; and Z represents a C₂ to C₁₀ alkenyl or alkynyl group which may have a substituent.

Here, examples of the substituent include a cyano group, an isocyanato group, acyl groups (-(C=O)-R^{c}), acyloxy groups (-O(C=O)-R^{c}), alkoxycarbonyl groups (-(C=O)O-R^{c}), sulfonyl groups (-SO₂-R^{c}), sulfonyloxy groups (-O(SO₂)-R^{c}), alkoxysulfonyl groups (-(SO₂)-O-R^{c}), alkoxycarbonyloxy groups (-O-(C=O)-O-R^{c}), ether groups (-O-R^{c}), an acrylic group, a methacrylic group, halogens (preferably, fluorine), a trifluoromethyl group, and the like. R^{c} represents a C₁ to C₁₀ alkyl group, a C₂ to C₁₀ alkenyl group, or a C₂ to C₁₀ alkynyl group. The carbon atoms contained in these substituents are not counted as the number of carbon atoms of the C₁ to C₁₂ hydrocarbon group as R²¹ to R²³ and Z.

Among these substituents, preferred are a cyano group, an isocyanato group, acyl groups (-(C=O)-R^{c}), acyloxy groups (-O(C=O)-R^{c}), and alkoxycarbonyl groups (-(C=O)O-R^{c}), more preferred are a cyano group, an isocyanato group, acyl groups (-(C=O)-R^{c}), or alkoxycarbonyl groups (-(C=O)O-R^{c}), particularly preferred is a cyano group, an isocyanato group, or alkoxycarbonyl groups (-(C=O)O-R^{c}), and most preferred is a cyano group.

Specific examples of C₁ to C₁₀ alkyl groups include a methyl group, an ethyl group, an n-propyl group, an iso-propyl group, an n-butyl group, a tert-butyl group, an n-pentyl group, a hexyl group, a heptyl group, an octyl group, a nonyl group, a decyl group, and the like. Among these, preferred is a methyl group, an ethyl group, an n-propyl group, an n-butyl group, a tert-butyl group, an n-pentyl group, or a hexyl group, more preferred is a methyl group, an ethyl group, an n-propyl group, an n-butyl group, a tert-butyl group, or an n-pentyl group, and particularly preferred is a methyl group or an ethyl group.

Specific examples of C₆ to C₁₈ aryl groups include a phenyl group, a tolyl group, and the like. Among these, preferred is a phenyl group because it facilitates progression of condensation to the active material (s) .

Specific examples of C₇ to C₁₈ aralkyl groups include a phenylmethyl group (benzyl group), a phenylethyl group (phenethyl group), a phenylpropyl group, a phenylbutyl group, a phenylisopropyl group, and the like. Among these, preferred are a benzyl group and a phenethyl group, and particularly preferred is a benzyl group because the compound represented by General Formula (β) tends to be localized near the surface(s) of the positive electrode active material and/or the negative electrode active material.

Specific examples of C₂ to C₁₀ alkenyl groups include a vinyl group, an allyl group, a methallyl group, a 2-butenyl group, a 3-methyl-2-butenyl group, a 3-butenyl group, a 4-pentenyl group, and the like. Among these, preferred is a vinyl group, an allyl group, a methallyl group, or 2-butenyl group, more preferred is a vinyl group, an allyl group, or a methallyl group, and particularly preferred is an allyl group or a methallyl group. The above-mentioned alkenyl groups enable suitable formation of an insulative coating film.

Specific examples of C₂ to C₁₀ alkynyl groups include an ethynyl group, a 2-propynyl group, a 2-butynyl group, a 3-butynyl group, a 4-pentynyl group, a 5-hexynyl group, and the like. Among these, preferred is an ethynyl group, a 2-propynyl group, a 2-butynyl group, or a 3-butynyl group, more preferred is an ethynyl group, a 2-propynyl group, or a 3-butynyl group, and particularly preferred is an ethynyl group or a 2-propynyl group. The above-mentioned alkynyl groups enable suitable formation of an insulative coating film.

Because suitable interaction of the compound represented by General Formula (β) and the compound represented by General Formula (A) is facilitated, in General Formula (β), at least one, preferably at least two, more preferably all of R²¹ to R²³ are C₁ to C₁₀ alkyl groups which may have a substituent. Most preferably, these are a methyl group or an ethyl group. Further, when any one of R²¹ to R²³ is a methyl group, not all R²¹ to R²³ need to be methyl groups. For example, preferred are combinations below: (R²¹, R²², R²³): (methyl group, methyl group, ethyl group), (methyl group, methyl group, n-butyl group), (methyl group, methyl group, tert-butyl group), (methyl group, methyl group, phenyl group), (methyl group, ethyl group, ethyl group), and (methyl group, phenyl group, phenyl group).

In General Formula (β), Z is preferably a C₂ to C₁₀ alkenyl group which may have a substituent, more preferably a C₂ to C₁₀ alkenyl group, still more preferably a vinyl group, an allyl group, or a methallyl group, particularly preferably an allyl group or a methallyl group. These enable suitable formation of an insulative coating film.

Specific examples of the compound represented by General Formula (β) include compounds having structures below:

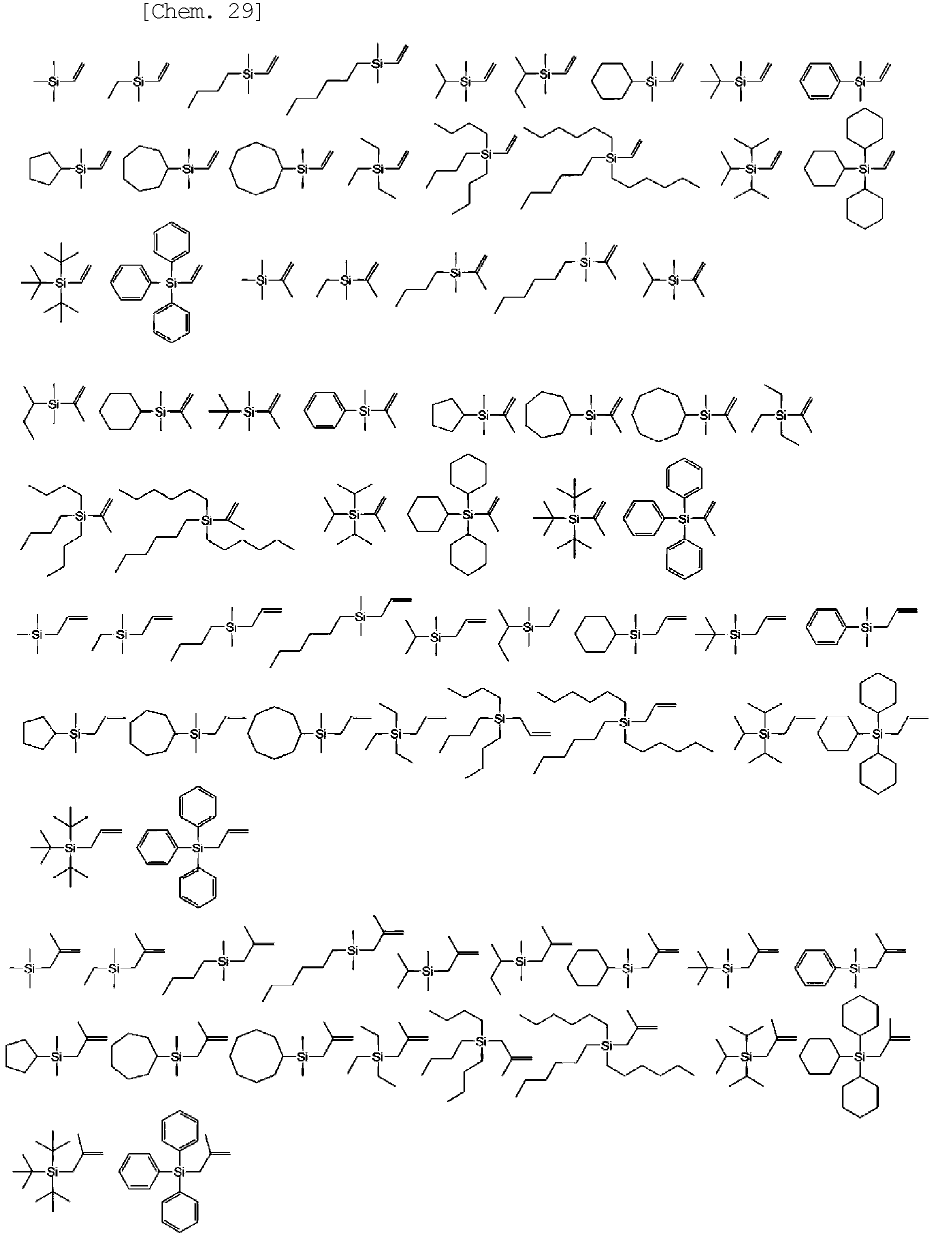

More preferred examples thereof include compounds having structures below. The compounds having structures below more suitably interact with the compound represented by General Formula (A).

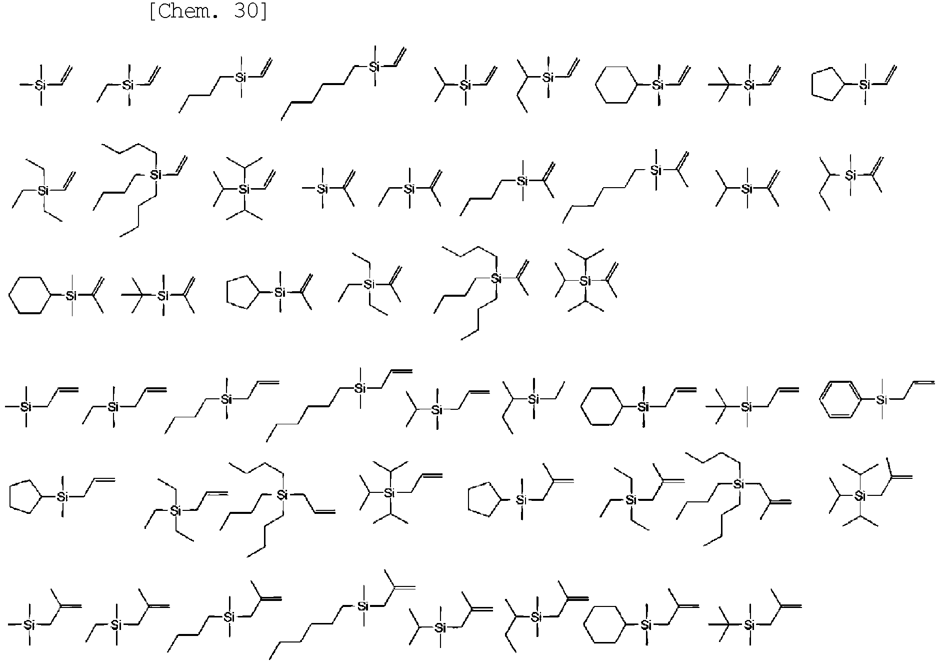

Particularly preferred examples thereof include compounds having structures below. The compounds having structures below further more suitably interact with the compound represented by General Formula (A) .

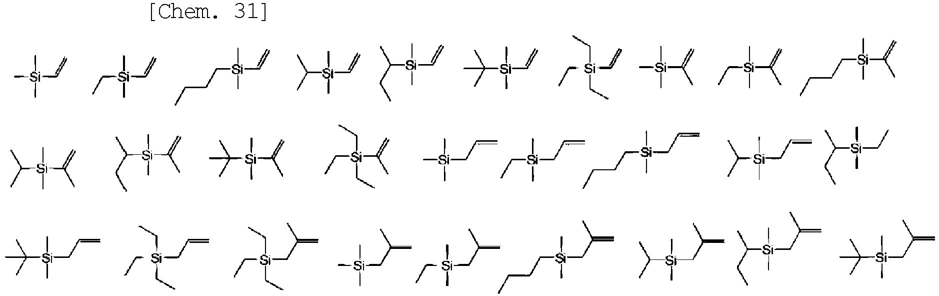

Most preferred examples thereof include compounds having structures below. The compounds having structures below are highly reactive, and suitably form an insulative coating film.

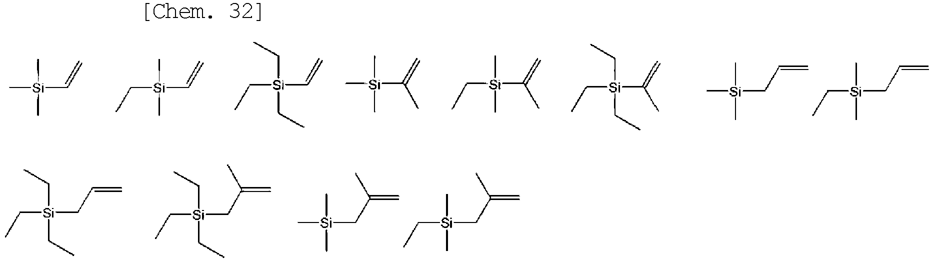

These compounds represented by General Formula (β) may be used alone or in combination.

The content of the compound represented by General Formula (β) (the total content if two or more compounds are used) relative to the total amount of the nonaqueous electrolytic solution according to one embodiment of the present invention is usually 0.01 mass ppm or more, preferably 0.001% by mass or more, more preferably 0.005% by mass or more, still more preferably 0.01% by mass or more, and is usually 5% by mass or less, preferably 2% by mass or less, more preferably 1% by mass or less, still more preferably 0.5% by mass or less, further still more preferably less than 0.5% by mass, particularly preferably 0.2% by mass or less, most preferably 0.1% by mass or less.

When the content of the compound represented by General Formula (β) relative to the total amount of the nonaqueous electrolytic solution falls within the above ranges, a battery can be prepared in which concentration of the compound represented by General Formula (β) to the active material(s) suitably progresses and the gas generation amount during initial conditioning is further suppressed.

From the viewpoint of suitably forming a composite coating film composed of the compound represented by General Formula (A) and the compound represented by General Formula (β), the mass ratio of the content of the compound represented by General Formula (A) to the content of the compound represented by General Formula (β) in the nonaqueous electrolytic solution is preferably 1.0 or more, more preferably 1.5 or more, still more preferably 2.0 or more, particularly preferably 3.0 or more, most preferably 5.0 or more, and preferably 1.0 × 10⁴ or less, more preferably 0.5 × 10⁴ or less, still more preferably 1.0 × 10³ or less.

Moreover, from the viewpoint of suitably forming a composite coating film composed of the compound represented by General Formula (A) and the compound represented by General Formula (α) or the compound represented by General Formula (β), the mass ratio of the content of the compound represented by General Formula (α) or the compound represented by General Formula (β) (the total content if both of the compound represented by General Formula (α) and the compound represented by General Formula (β) are contained) to the compound represented by General Formula (A) in the nonaqueous electrolytic solution is preferably 1.0 or more, more preferably 1.5 or more, still more preferably 2.0 or more, particularly preferably 3.0 or more, most preferably 5.0 or more, and is preferably 1.0 × 10⁴ or less, more preferably 0.5 × 10⁴ or less, still more preferably 1.0 × 10³ or less.

Any method can be used to contain the compound represented by General Formula (α) or compound represented by General Formula (β) and the compound represented by General Formula (A) in the nonaqueous electrolytic solution. Examples of such a method include a method of directly adding the above compounds to the nonaqueous electrolytic solution, and a method of forming the above compounds in a battery or in the nonaqueous electrolytic solution.

In this specification, the content of the compound means the content thereof when the nonaqueous electrolytic solution is produced, when the nonaqueous electrolytic solution is injected into a battery, or when the product is shipped as a battery. Identification of the compound represented by General Formula (α), the compound represented by General Formula (β), and the compound represented by General Formula (A) in the nonaqueous electrolytic solution and measurement of the contents thereof are performed by nuclear magnetic resonance (NMR) spectroscopy, gas chromatography (GC), or the like.

### <1-1-4. Electrolyte>

The nonaqueous electrolytic solution according to the present embodiment usually contains an electrolyte as its component as in standard nonaqueous electrolytic solutions. The electrolyte used in the nonaqueous electrolytic solution according to the present embodiment can be any alkali metal salt without limitation, and lithium salts such as LiBF₄, LiPF₆, LiN(FSO₂)₂, LiN(CF₃SO₂)₂, and lithium difluorooxalate borate can be suitably used. These lithium salts can also be used alone or in combination.

The total concentration of (an) alkali metal salt(s) in the nonaqueous electrolytic solution is not particularly limited, and is usually 8% by mass or more, preferably 8.5% by mass or more, more preferably 9% by mass or more relative to the total amount of the nonaqueous electrolytic solution. The total concentration is usually 18% by mass or less, preferably 17% by mass or less, more preferably 16% by mass or less. When the total concentration of alkali metal salts as the electrolytes falls within the above range, appropriate electrical conduction to the operation of the battery is ensured, and thus sufficient output characteristics tend to be obtained.

### <1-1-5. Nonaqueous solvent>

As the main component, the nonaqueous electrolytic solution according to the present embodiment usually contains a nonaqueous solvent for dissolving the above-mentioned electrolyte as in standard nonaqueous electrolytic solutions. The nonaqueous solvent is not particularly limited, and known organic solvent can be used. Examples of organic solvents include saturated cyclic carbonates such as ethylene carbonate, propylene carbonate, and butylene carbonate; linear carbonates such as dimethyl carbonate, diethyl carbonate, and ethyl methyl carbonate; carboxylic acid esters such as methyl acetate, ethyl acetate, propyl acetate, and butyl acetate; ether compounds such as dimethoxymethane, diethoxymethane, ethoxymethoxymethane, tetrahydrofuran, 1,3-dioxane, and 1,4-dioxane; sulfone compounds such as 2-methylsulfolane, 3-methylsulfolane, 2-fluorosulfolane, 3-fluorosulfolane, dimethyl sulfone, ethyl methyl sulfone, and monofluoromethyl methyl sulfone; and the like. Preferred are saturated cyclic carbonates, linear carbonates, or carboxylic acid esters, and more preferred are saturated cyclic carbonates or linear carbonates. These nonaqueous solvents can be used alone or in combination.

### <1-1-6. Aid>

The nonaqueous electrolytic solution according to the present embodiment may contain an aid in the range achieving the effects of the present invention.

Examples of aids include
difluorophosphoric acid anion-containing compounds;
fluorosulfonic acid anion-containing compounds;
oxalate anion-containing compounds;
sulfonyl imide anion-containing compounds;
alkyl sulfuric acid anion-containing compounds;
unsaturated cyclic carbonates such as vinylene carbonate, vinyl ethylene carbonate, and ethynyl ethylene carbonate;
fluorinated cyclic carbonates such as monofluoroethylene carbonate, 4,4-difluoroethylene carbonate, 4,5-difluoroethylene carbonate, and 4,5-difluoro-4,5-dimethyl ethylene carbonate;
carbonate compounds such as methoxyethyl-methyl carbonate;
spiro compounds such as methyl-2-propynyl oxalate;
diisocyanates having cycloalkylene groups, such as 1,3-bis(isocyanatomethyl)cyclohexane; isocyanate compounds such as trimer compounds derived from compounds each having at least two isocyanate groups in the molecule, such as triallyl isocyanurate, or aliphatic polyisocyanates prepared by adding a polyhydric alcohol to these;
nitrogen-containing compounds such as 1-methyl-2-pyrrolidinone;
hydrocarbon compounds such as cycloheptane;
fluorine-containing aromatic compounds such as fluorobenzene;
ester compounds such as 2-propynyl 2-(methanesulfonyloxy)propionate;
lithium salts such as lithium ethylmethyloxycarbonylphosphonate; and the like. These may be used alone or in combination. By adding these aids, gas generation during initial conditioning can be suppressed, and capacity retention characteristics after storage at a high temperature and cycle characteristics can be improved.

In the nonaqueous electrolytic solution according to one embodiment of the present invention, among these, preferred is use of a combination of one or more selected from difluorophosphoric acid anion-containing compounds, fluorosulfonic acid anion-containing compounds, oxalate anion-containing compounds, sulfonyl imide anion-containing compounds, and alkyl sulfuric acid anions (hereinafter, these are also referred to as "specific anion-containing compounds") and/or one or more selected from unsaturated cyclic carbonates and cyclic carbonates having a fluorine atom (hereinafter, also referred to as "specific carbonate compounds") because gas generation is further suppressed during initial conditioning and a battery resistant to swelling is obtained.

When two or more of these specific anion-containing compounds and specific carbonate compounds are used in combination, use of (a) specific anion-containing compound(s) and (a) specific carbonate compound(s) in combination is preferred.

Among these specific anion-containing compounds, particularly preferred are difluorophosphoric acid anion-containing compounds.

The content of the aid is usually 0.001% by mass or more, preferably 0.01% by mass or more, more preferably 0.1% by mass or more, still more preferably 0.2% by mass or more, and is usually 10% by mass or less, preferably 8% by mass or less, more preferably 5% by mass or less in 100% by mass of the nonaqueous electrolytic solution. When two or more of these aids are used in combination, preferably, the total amount satisfies the above ranges.

### [1-1-6-1. Specific anion-containing compound]

The specific anion-containing compound is usually an acid or a salt, and is preferably a salt. Counter cations of salts of the specific anion-containing compounds are not particularly limited, and examples thereof include lithium, sodium, potassium, rubidium, cesium, magnesium, calcium, barium, ammonium represented by NR¹²³R¹²⁴R¹²⁵R¹²⁶ (where R¹²³ to R¹²⁶ each independently represent a hydrogen atom or a C₁ to C₁₂ organic group), and the like. Among these, preferred is lithium.

Examples of the C₁ to C₁₂ organic groups represented by R¹²³ to R¹²⁶ in the above-described ammonium include, but should not be limited to, alkyl groups which may be substituted by a halogen atom, cycloalkyl groups which may be substituted by a halogen atom or an alkyl group, aryl groups which may be substituted by a halogen atom or an alkyl group, nitrogen atom-containing heterocyclic groups which may have a substituent, and the like. Especially, each of R¹²³ to R¹²⁶ is independently preferred to be a hydrogen atom, an alkyl group, a cycloalkyl group, or a nitrogen atom-containing heterocyclic group.

### (Difluorophosphoric acid anion-containing compound)

Difluorophosphoric acid anion-containing compounds may be used alone or in any combination and ratios. The content of the difluorophosphoric acid anion-containing compound (the total content if two or more of them are used) relative to the total amount of the nonaqueous electrolytic solution is not particularly limited, and may be optionally selected unless it significantly impairs the effects of the present invention. The content is usually 0.001 to 8% by mass, preferably 0.01% by mass or more, more preferably 0.1% by mass or more, and is preferably 5.0% by mass or less, more preferably 3.0% by mass or less, still more preferably 2.0% by mass or less, most preferably 1.5% by mass or less. The content is preferably 0.001 to 5.0% by mass, more preferably 0.001 to 3.0% by mass, still more preferably 0.001 to 2.0% by mass, most preferably 0.001 to 1.5% by mass.

When the content of the difluorophosphoric acid anion-containing compound(s) falls within the above ranges, initial gas generation can be more suitably suppressed.

### (Fluorosulfonic acid anion-containing compound)

Fluorosulfonic acid anion-containing compounds may be used alone or in any combination and ratios. The content of the fluorosulfonic acid anion-containing compound (the total content if two or more of them are used) relative to the total amount of the nonaqueous electrolytic solution is not particularly limited, and may be optionally selected unless it significantly impairs the effects of the present invention. The content is usually 0.001 to 8% by mass, preferably 0.01% by mass or more, more preferably 0.1% by mass or more, and is preferably 5.0% by mass or less, more preferably 3.0% by mass or less, still more preferably 2.0% by mass or less, most preferably 1.5% by mass or less. The content is preferably 0.001 to 5.0% by mass, more preferably 0.001 to 3.0% by mass, still more preferably 0.001 to 2.0% by mass, most preferably 0.001 to 1.5% by mass.

When the content of the fluorosulfonic acid anion-containing compound(s) falls within the above ranges, initial gas generation can be more suitably suppressed.

### (Sulfonyl imide anion-containing compound)

Specific examples of sulfonyl imide anions forming sulfonyl imide anion-containing compounds include N⁻(FSO₂)₂, N⁻(FSO₂)(CF₃SO₂), N⁻(CF₃SO₂)₂, N⁻(C₂F₅SO₂)₂, cyclic 1,2-perfluoroethane disulfonyl imide anion, cyclic 1,3-perfluoropropane disulfonyl imide anion, and N⁻(CF₃SO₂)(C₄F₉SO₂). Preferred are N⁻(FSO₂)₂, N⁻(CF₃SO₂)₂, and N⁻(C₂F₅SO₂)₂, and particularly preferred is N⁻(FSO₂)₂.

Sulfonyl imide anion-containing compounds may be used alone or in any combination and ratios. The content of the sulfonyl imide anion-containing compound (the total content if two or more of them are used) relative to the total amount of the nonaqueous electrolytic solution is not particularly limited, and may be optionally selected unless it significantly impairs the effects of the present invention. The content is usually 0.001 to 8% by mass, preferably 0.01% by mass or more, more preferably 0.1% by mass or more, and is preferably 5.0% by mass or less, more preferably 3.0% by mass or less, still more preferably 2.0% by mass or less, most preferably 1.5% by mass or less. The content is preferably 0.001 to 5.0% by mass, more preferably 0.001 to 3.0% by mass, still more preferably 0.001 to 2.0% by mass, most preferably 0.001 to 1.5% by mass.

When the content of the sulfonyl imide anion-containing compound(s) falls within the above ranges, initial gas generation can be more suitably suppressed.

### (Alkyl sulfuric acid anion-containing compound)

Specific examples of alkyl sulfuric acid anions forming alkyl sulfuric acid anion-containing compounds include compounds represented by CₙH_{2 n+1}OSO³⁻ (where 1 ≤ n ≤ 10). Preferred is methyl sulfuric acid anion or ethyl sulfuric acid anion.

The content of the alkyl sulfuric acid anion-containing compound is not particularly limited, and is optionally selected unless it significantly impairs the effects of the present invention. The content is usually 0.001 to 8% by mass, preferably 0.01% by mass or more, more preferably 0.1% by mass or more, and is preferably 5.0% by mass or less, more preferably 3.0% by mass or less, still more preferably 2.0% by mass or less, most preferably 1.5% by mass or less. The content is preferably 0.001 to 5.0% by mass, more preferably 0.001 to 3.0% by mass, still more preferably 0.001 to 2.0% by mass, most preferably 0.001 to 1.5% by mass.

When the content of the alkyl sulfuric acid anion-containing compound falls within the above ranges, initial gas generation can be more suitably suppressed.

### (Oxalate complex anion-containing compound)

Specific examples of oxalate complex anions forming oxalate complex anion-containing compounds include (oxalate)borate anion, bis(oxalate)borate anion, tetrafluorooxalate phosphate anion, difluorobis(oxalate)phosphate anion, and tris(oxalate)phosphate anion. Preferred are bis(oxalate)borate and difluorobis(oxalate)phosphate anions, and particularly preferred is bis(oxalate)borate anion.

These oxalate complex anion-containing compounds may be used alone or in any combination and ratios.

The content of the oxalate complex anion-containing compound (the total content if two or more of them are used) is not particularly limited, and may be optionally selected unless it significantly impairs the effects of the present invention. The content is usually 0.001 to 8% by mass, preferably 0.01% by mass or more, more preferably 0.1% by mass or more, and is preferably 5.0% by mass or less, more preferably 3.0% by mass or less, still more preferably 2.0% by mass or less, most preferably 1.5% by mass or less. The content is preferably 0.001 to 5.0% by mass, more preferably 0.001 to 3.0% by mass, still more preferably 0.001 to 2.0% by mass, most preferably 0.001 to 1.5% by mass.

When the content of the oxalate complex anion-containing compound falls within the above ranges, initial gas generation can be more suitably suppressed.

### [1-1-6-2. Specific carbonate compound]

The nonaqueous electrolytic solution preferably contains at least one carbonate compound selected from the group consisting of unsaturated cyclic carbonates having carbon-carbon unsaturated bonds and cyclic carbonates having a fluorine atom. Among these, it is preferred that an unsaturated cyclic carbonate be contained, and it is more preferred that vinylene carbonate be contained. These can be used alone or in any combination and ratios. It is preferred that an unsaturated cyclic carbonate and a fluorinated cyclic carbonate be contained, it is more preferred that vinylene carbonate and a fluorinated cyclic carbonate be contained or an unsaturated cyclic carbonate and monofluoroethylene carbonate be contained, and it is still more preferred that vinylene carbonate and monofluoroethylene carbonate be contained.

### (Unsaturated cyclic carbonate)

Any unsaturated cyclic carbonate can be used without limitation as long as it is a cyclic carbonate having a carbon-carbon double bond or a carbon-carbon triple bond. Here, the term "unsaturated cyclic carbonate" also encompasses cyclic carbonates having an aromatic ring.

Examples of unsaturated cyclic carbonates include vinylene carbonates, ethylene carbonates substituted by a substituent having an aromatic ring, a carbon-carbon double bond, or a carbon-carbon triple bond, phenyl carbonates, vinyl carbonates, allyl carbonates, catechol carbonates, and the like. Among these, preferred are vinylene carbonates and ethylene carbonates substituted by a substituent having an aromatic ring, a carbon-carbon double bond, or a carbon-carbon triple bond.

Examples of vinylene carbonates include vinylene carbonate, methyl vinylene carbonate, 4,5-dimethyl vinylene carbonate, phenyl vinylene carbonate, 4,5-diphenyl vinylene carbonate, vinyl vinylene carbonate, 4,5-vinyl vinylene carbonate, allyl vinylene carbonate, 4,5-diallyl vinylene carbonate, and the like.

Examples of ethylene carbonates substituted by a substituent having an aromatic ring, a carbon-carbon double bond, or a carbon-carbon triple bond include vinyl ethylene carbonate, 4,5-divinyl ethylene carbonate, 4-methyl-5-vinyl ethylene carbonate, 4-allyl-5-vinyl ethylene carbonate, ethynyl ethylene carbonate, 4,5-diethynyl ethylene carbonate, 4-methyl-5-ethynyl ethylene carbonate, 4-vinyl-5-ethynyl ethylene carbonate, 4-allyl-5-ethynyl ethylene carbonate, phenyl ethylene carbonate, 4,5-diphenyl ethylene carbonate, 4-phenyl-5-vinyl ethylene carbonate, 4-allyl-5-phenyl ethylene carbonate, allyl ethylene carbonate, 4,5-diallyl ethylene carbonate, 4-methyl-5-allyl ethylene carbonate, and the like.

Among these, preferred are vinylene carbonate, vinyl ethylene carbonate, and ethynyl ethylene carbonate because these allow formation of a more stable composite coating film on the electrodes. More preferred are one or more selected from vinylene carbonate and vinyl ethylene carbonate, and still more preferred is vinylene carbonate.

These unsaturated cyclic carbonates can be used alone or in any combination and ratios.

### (Cyclic carbonate having a fluorine atom)

Any cyclic carbonate having a fluorine atom can be used without limitation as long as it has a cyclic carbonate structure and contains a fluorine atom.

Examples of cyclic carbonates having a fluorine atom include fluorinated products of cyclic carbonates having an alkylene group with 2 or more and 6 or less carbon atoms, and derivatives thereof, and examples thereof include a fluorinated product of ethylene carbonate (fluoroethylene carbonate) and derivatives thereof, and ethylene carbonate having a fluorine-containing group. Examples of derivatives of the fluorinated product of ethylene carbonate include fluorinated products of ethylene carbonate substituted by an alkyl group (e.g., an alkyl group with 1 or more and 4 four or less carbon atoms). Among these, preferred are fluoroethylene carbonates having 1 or more and 8 or less fluorine atoms and derivatives thereof.

Examples of fluoroethylene carbonates having 1 or more and 8 or less fluorine atoms and derivatives thereof and ethylene carbonates having a fluorine-containing group include monofluoroethylene carbonate, 4,4-difluoroethylene carbonate, 4,5-difluoroethylene carbonate, 4-fluoro-4-methyl ethylene carbonate, 4,5-difluoro-4-methyl ethylene carbonate, 4-fluoro-5-methyl ethylene carbonate, 4,4-difluoro-5-methyl ethylene carbonate, 4-(fluoromethyl)-ethylene carbonate, 4-(difluoromethyl)-ethylene carbonate, 4-(trifluoromethyl)-ethylene carbonate, 4-(fluoromethyl)-4-fluoroethylene carbonate, 4-(fluoromethyl)-5-fluoroethylene carbonate, 4-fluoro-4,5-dimethyl ethylene carbonate, 4,5-difluoro-4,5-dimethyl ethylene carbonate, 4,4-difluoro-5,5-dimethyl ethylene carbonate, and the like.

Among these, preferred are one or more selected from monofluoroethylene carbonate, 4,4-difluoroethylene carbonate, and 4,5-difluoroethylene carbonate to impart high ionic conductivity to the electrolytic solution and facilitate formation of a stable interface protective coating film.

These cyclic carbonates having a fluorine atom can be used alone or in any combination and ratios.

### (Content of specific carbonate compound)

The content of the specific carbonate compound (the total amount if two or more of them are used) relative to the total amount of the nonaqueous electrolytic solution is usually 0.001 to 10% by mass, preferably 0.01% by mass or more, more preferably 0.1% by mass or more, still more preferably 0.5% by mass or more, and is preferably 8.0% by mass or less, more preferably 6.0% by mass or less, still more preferably 5.0% by mass or less. The content is preferably 0.001 to 10% by mass, more preferably 0.001 to 8.0% by mass, still more preferably 0.001 to 6.0% by mass, most preferably 0.001 to 5.0% by mass.

When the content of the specific carbonate compound(s) falls within the above ranges, gas generation during initial conditioning can be significantly suppressed. The reason, although not clarified, is considered as follows: addition of the carbonate compound in such a ratio allows formation of a coating film on the electrode(s) to minimize side reactions of the components of the nonaqueous electrolytic solution, thereby suppressing gas generation during initial conditioning.

Identification of the specific carbonate compound and measurement of the content is performed by nuclear magnetic resonance (NMR) spectroscopy.

### (Mass ratio of compound represented by General Formula (A) to specific carbonate compound)

The mass ratio of the content of the specific carbonate compound (the total amount if two or more of them are used) to the content of the compound represented by General Formula (A) (specific carbonate compound [g]/compound [g] represented by General Formula (A)) is usually 1 to 200. The mass ratio is preferably 3 or more, more preferably 5 or more, and is preferably 100 or less, more preferably 70 or less, still more preferably 50 or less. The mass ratio is preferably 1 to 100, more preferably 1 to 70, still more preferably 1 to 50. When the mass ratio falls within the above ranges, gas generation during initial conditioning can be significantly suppressed. The reason, although not clarified, is considered as follows: addition of the specific carbonate compound in the mass ratio within the above ranges allows formation of a coating film on the electrode(s) to minimize side reactions of the components of the nonaqueous electrolytic solution, thereby suppressing gas generation during initial conditioning.

### (Mass ratio of electrolyte to specific carbonate compound)

In the nonaqueous electrolytic solution, the mass ratio of the content of the specific carbonate compound (the total amount if two or more of them are used) to the content of the electrolyte (preferably LiPF₆) (specific carbonate compound [g]/electrolyte [g]) is usually 0.001 to 0.8. The mass ratio is preferably 0.01 or more, more preferably 0.05 or more, still more preferably 0.1 or more, and is preferably 0.5 or less, more preferably 0.4 or less, still more preferably 0.35 or less. The mass ratio is preferably 0.001 to 0.5, more preferably 0.001 to 0.4, still more preferably 0.001 to 0.35. When the mass ratio falls within the above ranges, gas generation during initial conditioning can be significantly suppressed. The reason, although not clarified, is considered as follows: addition of the specific carbonate compound and the electrolyte in the mass ratio within the above ranges allows formation of a coating film on the electrode(s) to minimize side reactions of the electrolyte in the battery system, thereby suppressing gas generation during initial conditioning.

### <1-2. Nonaqueous electrolytic solution battery>

The nonaqueous electrolytic solution battery according to one embodiment of the present invention is a nonaqueous electrolytic solution battery including a positive electrode, a negative electrode, and a nonaqueous electrolytic solution, the battery including the above-mentioned nonaqueous electrolytic solution according to one embodiment of the present invention. More specifically, the nonaqueous electrolytic solution battery includes a positive electrode which has a current collector and a positive electrode active material layer formed on at least part of the surface of the current collector and is capable of absorbing and releasing metal ions, a negative electrode which has a current collector and a negative electrode active material layer formed on at least part of the surface of the current collector and is capable of absorbing and releasing metal ions, and the nonaqueous electrolytic solution which is a nonaqueous electrolytic solution comprising an alkali metal salt, a nonaqueous solvent, the above-mentioned compound represented by General Formula (A), and at least one of the compound represented by General Formula (α) and the compound represented by General Formula (β).

### <1-2-1. Battery configuration>

The nonaqueous electrolytic solution battery according to the present embodiment has a similar configuration to those of conventionally known nonaqueous electrolytic solution batteries other than the nonaqueous electrolytic solution. Generally, the positive electrode and the negative electrode are laminated with a porous membrane (separator) interposed therebetween, the porous membrane being impregnated with the nonaqueous electrolytic solution, and these are accommodated in a case (exterior body).

The nonaqueous electrolytic solution battery according to the present embodiment can be of any shape without limitation, and may be any of a cylindrical battery, a rectangular battery, a laminate battery, a coin battery, a large battery, and the like.

### <1-2-2. Nonaqueous electrolytic solution>

The above-mentioned nonaqueous electrolytic solution according to one embodiment of the present invention is used as the nonaqueous electrolytic solution. To be noted, another nonaqueous electrolytic solution can be blended with the nonaqueous electrolytic solution in the range without departing the scope of the present invention as defined in the appended claims, and the mixed nonaqueous electrolytic solution can also be used.

### <1-2-3. Positive electrode>

The positive electrode has a current collector and a positive electrode active material formed on at least part of the surface of the current collector. Other than this, a conventionally known configuration can be used.

Any positive electrode active material can be used without limitation as long as it is capable of electrochemically absorbing and releasing metal ions. Specifically, examples thereof include lithium cobaltate, or transition metal oxides containing at least Ni and Co where Ni and Co occupy 50 mol% or more of all the transition metals. Preferred are those which are capable of electrochemically absorbing and releasing lithium ions. For example, preferred are transition metal oxides containing lithium and at least Ni and Co where Ni and Co occupy 60 mol% or more of all the transition metals. Ni and Co have redox potentials suitable for use as the positive electrode material for the secondary battery, and are suitable for applications required for high capacity.

Among these transition metal oxides, preferred is a transition metal oxide represented by Formula (11) below:

Liₐ₁Ni_{b1}Co_{c1}M_{d1}O₂ ... (11)

In Formula (11) above, a1, b1, c1, and d1 represent numeric values satisfying 0.90 ≤ a1 ≤ 1.10, 0.50 ≤ b1 ≤ 0.98, 0.01 ≤ c1 < 0.50, and 0.01 ≤ d1 < 0.50 where b1+c1+d1=1; M represents at least one element selected from the group consisting of Mn, Al, Mg, Zr, Fe, Ti, and Er.

In Formula (11), the numeric value is preferably in the range of 0.1 ≤ d1 < 0.50.

Adjusting the compositional ratio of Ni and Co to other metal species within the above ranges are advantageous in that the transition metals are difficult to elute from the positive electrode, and if eluted, adverse influences from Ni and Co within the nonaqueous secondary battery are small.

Suitable specific examples thereof include LiNi_{0.85}Co_{0.10}Al_{0.05}O₂, LiNi_{0.80}Co_{0.15}Al_{0.05}O₂, LiNi_{0.5}Co_{0.2}Mn_{0.3}O₂, Li_{1.05}Ni_{0.50}Co_{0.20}Mn_{0.30}O₂, LiNi_{0.6}Co_{0.2}Mn_{0.2}O₂, LiNi_{0.8}Co_{0.1}Mn_{0.1}O₂, and the like.

### <1-2-4. Negative electrode>

The negative electrode has a current collector and a negative electrode active material formed on at least part of the surface of the current collector. Other than this, a conventionally known configuration can be used.

Any negative electrode active material can be used without limitation as long as it is capable of electrochemically absorbing and releasing metal ions. Specific examples thereof include carbon-based materials, materials containing a metal element and/or a metalloid element capable of forming an alloy with Li, lithium-containing metal composite oxide materials, and mixtures thereof. These may be used alone or in any combination. To obtain a battery having favorable cycle characteristics and favorable safety and further having excellent continuous charge characteristics, preferred is use of carbon-based materials, materials containing a metal element and/or a metalloid element capable of forming an alloy with Li, or a mixture of a material and graphite particles where this material contains a metal element and/or a metalloid element capable of forming an alloy with Li.

Examples of carbon-based materials include natural graphite, artificial graphite, amorphous carbon, carbon-coated graphite, graphite-coated graphite, resin coated graphite, and the like. Among these, preferred is natural graphite.

Examples of natural graphite include scaly graphite, flake graphite, and/or graphite particles prepared by spheronization or densification of these graphites, and the like. Among these, particularly preferred are spherical or ellipsoidal graphite particles subjected to a spheronization treatment from the viewpoint of filling properties of the particles or charge/discharge rate characteristics thereof. The graphite particles have an average particle size (d50) of usually 1 µm or more and 100 µm or less.

Usable materials containing a metal element and/or a metalloid element capable of forming an alloy with Li can be any one of those conventionally known. For example, from the viewpoint of capacity and cycle life, preferred is a single substance or a compound of metal element and/or metalloid element which is selected from the group consisting of Sb, Si, Sn, Al, As, and Zn and is capable of forming an alloy with Li. When the material containing a metal element and/or a metalloid element capable of forming an alloy with Li contains two or more elements, the material may be an alloy material composed of an alloy of these elements.

Examples of compounds containing a metal element and/or a metalloid element capable of forming an alloy with Li include metal oxides, metal nitrides, metal carbides, and the like. The compound may contain two or more of such metal elements and/or metalloid elements capable of forming an alloy with Li.

Among these, preferred is metallic Si (hereinafter, referred to as Si in some cases) or an Si-containing compound to increase capacity.

In this specification, Si and the Si-containing compound are collectively referred to as Si compound. Example of Si compounds specifically include SiOₓ, SiNₓ, SiCₓ, SiZ_{y}O_{z} (where Z=C, N), and the like. A preferred Si compound is Si oxide (SiOₓ) because it has theoretically larger capacity than that of graphite. Preferred is amorphous Si or nanosized Si crystals because they facilitate moving in and out of alkali ions such as lithium ions and can ensure high capacity.

The Si oxide represented by General Formula SiOₓ is formed from silicon dioxide (SiO₂) and Si as raw materials, where the value of x is usually 0 < x < 2.

When the material containing a metal element and/or a metalloid element capable of forming an alloy with Li is particles, the particles have an average particle size (d50) of usually 0.01 µm or more and 10 µm or less from the viewpoint of cycle life.

The mixture of graphite particles and particles of the material containing a metal element and/or a metalloid element capable of forming an alloy with Li, which is used as the negative electrode active material, may be a mixture in which particles of the above-mentioned material containing a metal element and/or a metalloid element capable of forming an alloy with Li and the above-mentioned graphite particles are mixed each independently in the form of particles, or may be a composite in which particles of the material containing a metal element and/or a metalloid element capable of forming an alloy with Li are present on the surfaces of the graphite particles or inside the graphite particles.

The proportion of the particles of the material containing a metal element and/or a metalloid element capable of forming an alloy with Li in the total amount of the graphite particles and the particles of the material containing a metal element and/or a metalloid element capable of forming an alloy with Li is usually 0.1% by mass or more, preferably 0.5% by mass or more, more preferably 1.0% by mass or more, still more preferably 2.0% by mass or more. The proportion is usually 99% by mass or less, preferably 50% by mass or less, more preferably 40% by mass or less, still more preferably 30% by mass or less, further still more preferably 25% by mass or less, further still more preferably 20% by mass or less, particularly preferably 15% by mass or less, most preferably 10% by mass or less. When the proportion falls within the above ranges, side reactions on the Si surface can be controlled, and a nonaqueous electrolytic solution battery having sufficient capacity can be obtained.

### <1-2-5. Separator>

Generally, a separator is interposed between the positive electrode and the negative electrode to prevent short circuit. In this case, when used, the separator is usually impregnated with the nonaqueous electrolytic solution according to one embodiment of the present invention. Conventionally known separators can be used.

### [Second embodiment]

### <2-1. Nonaqueous electrolytic solution>

The nonaqueous electrolytic solution according to the present invention contains a compound represented by General Formula (AA) and a compound represented by General Formula (αα) described below.

Although the mechanism to suppress the gas generation amount during initial conditioning by use of such a nonaqueous electrolytic solution containing a compound represented by General Formula (αα) and a compound represented by General Formula (AA) is not clarified, it is inferred as below.

Because the compound represented by General Formula (AA) has a cyclic structure having a polar structure (-SO₂-O-), the compound has higher permittivity than those of linear compounds. The compound represented by General Formula (α) also has a polar structure (-N-(C=O)-O) in the molecule. For this reason, these compounds are allowed to interact with a surface functional group of a negative electrode active material such as carbon and/or the surface of a positive electrode active material such as a transition metal oxide, and tend to be localized near the surface(s) of the active material(s). Further, it is inferred that the compounds localized on the surface(s) of the active material(s) (the compound represented by General Formula (AA) and the compound represented by General Formula (αα)) also interact with each other, thereby increasing the amount of the localized compounds fixed onto the surface of the positive electrode active material and/or the surface of the negative electrode active material. In particular, because the R-N-(C=O)-O-R structure of the compound represented by General Formula (αα) is highly adsorptive onto the surface(s) of the electrode(s), fixing of the compound represented by General Formula (AA) onto the electrode(s) is promoted from fixing of the compound represented by General Formula (αα) onto the electrode(s). Thereby, the compound represented by General Formula (αα) and the compound represented by General Formula (AA) localized on the electrode(s) during initial charge are electrochemically decomposed to form a composite insulating coating film. It is also considered that formation of the composite coating film efficiently progresses because a ring-opening reaction suitably progresses in the reaction of the compound represented by General Formula (AA). It is inferred that the composite coating film suppresses side reactions of the electrolytic solution during the initial conditioning, and thus suppresses gas generation.

Further, because the compound represented by General Formula (AA) has a cyclic structure having a polar structure (-SO₂-O-), the compound has a higher permittivity than those of linear compounds. For this reason, the compound represented by General Formula (AA) is allowed to interact with the surface of a negative electrode active material such as carbon and/or the surface of a positive electrode active material such as a transition metal oxide, and tends to be localized near the surface(s) thereof.

### <2-1-1. Compound represented by General Formula (AA)>

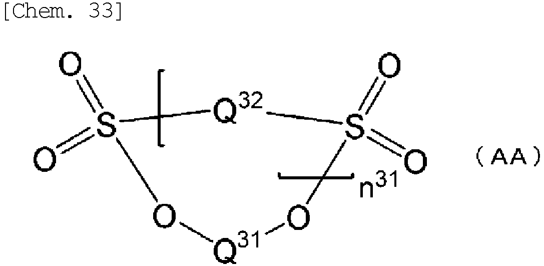

where in General Formula (AA), Q³¹ and Q³² each independently represent a C₁ to C₁₀ alkylene group; the alkylene group may be substituted by a hydrocarbon group, or a hydrogen atom of the alkylene group may be substituted by a halogen atom; n³¹ represents an integer of 0 or 1; and when n³¹ is 0, the sulfur atom and the oxygen atom form a direct bond.

Q³¹ and Q³² in General Formula (AA) each independently represent a C₁ to C₁₀ alkylene group. The alkylene group may be substituted by a hydrocarbon group, or a hydrogen atom of the alkylene group may be substituted by a halogen atom.

Q¹ when n³¹ is 0 is preferably a C₁ to C₅ alkylene group, more preferably a C₁ to C₃ alkylene group, particularly preferably a C₂ to C₃ alkylene group.

Q¹ when n³¹ is 1 is preferably a C₁ to C₅ alkylene group, more preferably a C₁ to C₃ alkylene group, particularly preferably a methylene group.

Q² is preferably a C₁ to C₅ alkylene group, more preferably a C₁ to C₃ alkylene group, particularly preferably a methylene group.

When the alkylene group has a hydrocarbon group as a substituent, carbon atoms contained in the substituent are not counted as the number of carbon atoms of the alkylene group.

Specific examples of alkylene groups include a methylene group, an ethylene group, an n-propylene group, a butylene group, a hexylene group, and the like.

Here, examples of the substituent include C₁ to C₁₀ hydrocarbon groups, halogen atoms (preferably, a fluorine atom), and the like.

Among these substituents, preferred are C₁ to C₈ hydrocarbon groups and halogen atoms (preferably, a fluorine atom), and particularly preferred are C₁ to C₆ hydrocarbon groups and a fluorine atom.

Specific examples of C₁ to C₁₀ hydrocarbon groups include C₁ to C₁₀ alkyl groups, C₁ to C₁₀ alkenyl groups, C₁ to C₁₀ alkynyl groups, C₆ to C₁₀ aryl groups, and C₇ to C₁₀ aralkyl groups.

Specific examples of the alkyl groups include a methyl group, an ethyl group, an n-propyl group, an iso-propyl group, an n-butyl group, a tert-butyl group, an n-pentyl group, a hexyl group, a heptyl group, an octyl group, a nonyl group, a decyl group, a cyclohexyl group, and the like. Among these, preferred are a methyl group, an ethyl group, an n-propyl group, an n-butyl group, a tert-butyl group, an n-pentyl group, a hexyl group, and a cyclohexyl group, more preferred are a methyl group, an ethyl group, an n-propyl group, an n-butyl group, a tert-butyl group, an n-pentyl group, and a cyclohexyl group, and particularly preferred are a methyl group, an ethyl group, an n-butyl group, a tert-butyl group, and a cyclohexyl group.

Specific examples of the alkenyl groups include a vinyl group, an allyl group, a methallyl group, a 2-butenyl group, a 3-methyl-2-butenyl group, a 3-butenyl group, a 4-pentenyl group, and the like. Among these, preferred are a vinyl group, an allyl group, a methallyl group, and a 2-butenyl group, more preferred are a vinyl group, an allyl group, and a methallyl group, and particularly preferred is a vinyl group or an allyl group.

Specific examples of the alkynyl groups include an ethynyl group, a 2-propynyl group, a 2-butynyl group, a 3-butynyl group, a 4-pentynyl group, a 5-hexynyl group, and the like. Among these, preferred are an ethynyl group, a 2-propynyl group, a 2-butynyl group, and a 3-butynyl group, more preferred are a 2-propynyl group and a 3-butynyl group, and particularly preferred is a 2-propynyl group.

Specific examples of the aryl groups include a phenyl group, a tolyl group, and the like. Among these, preferred is a phenyl group.

Specific examples of the aralkyl groups include a benzyl group, a phenethyl group, and the like.

Specific examples of the compound represented by General Formula (AA) include compounds shown below:

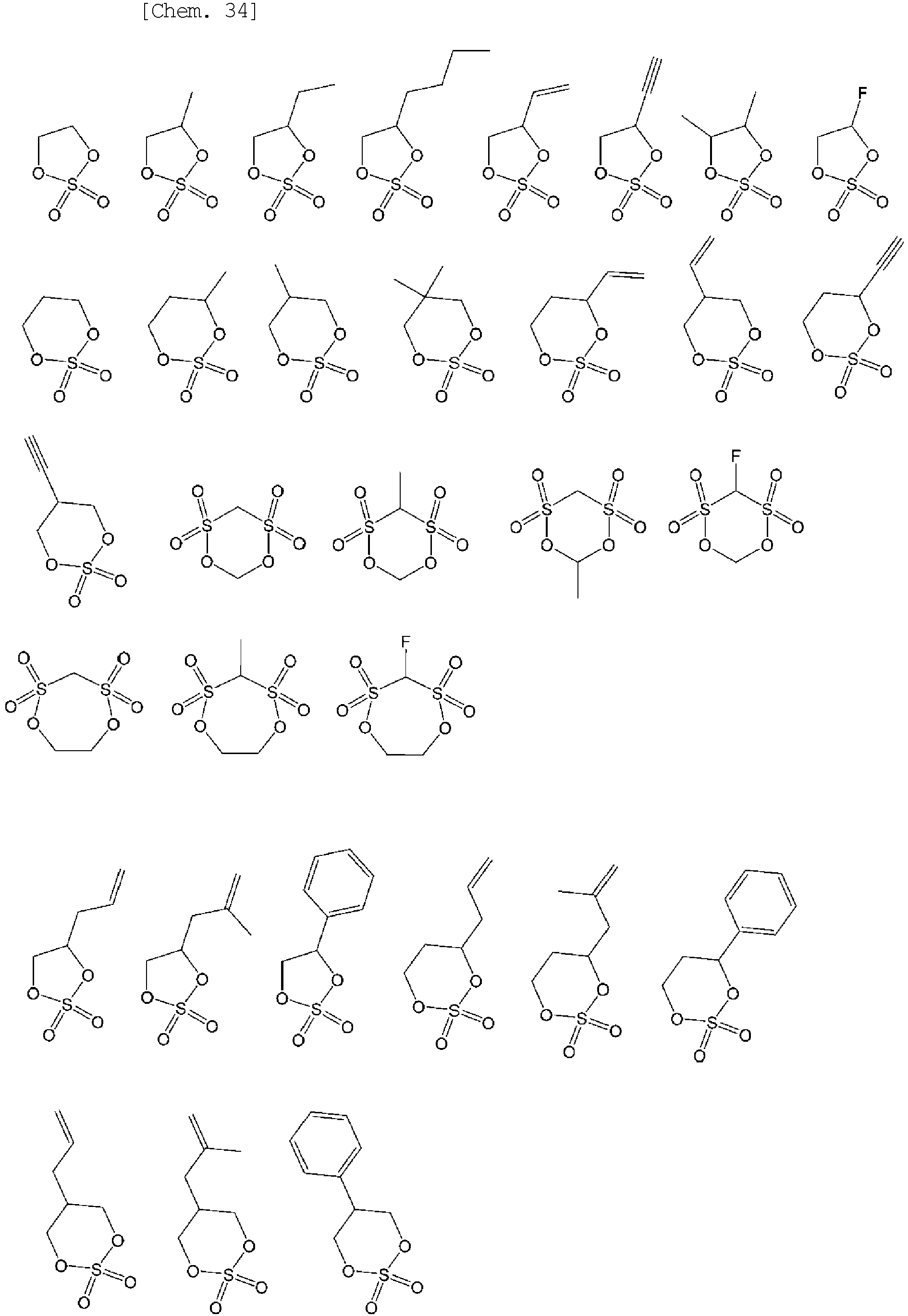

Preferred examples thereof include compounds shown below:

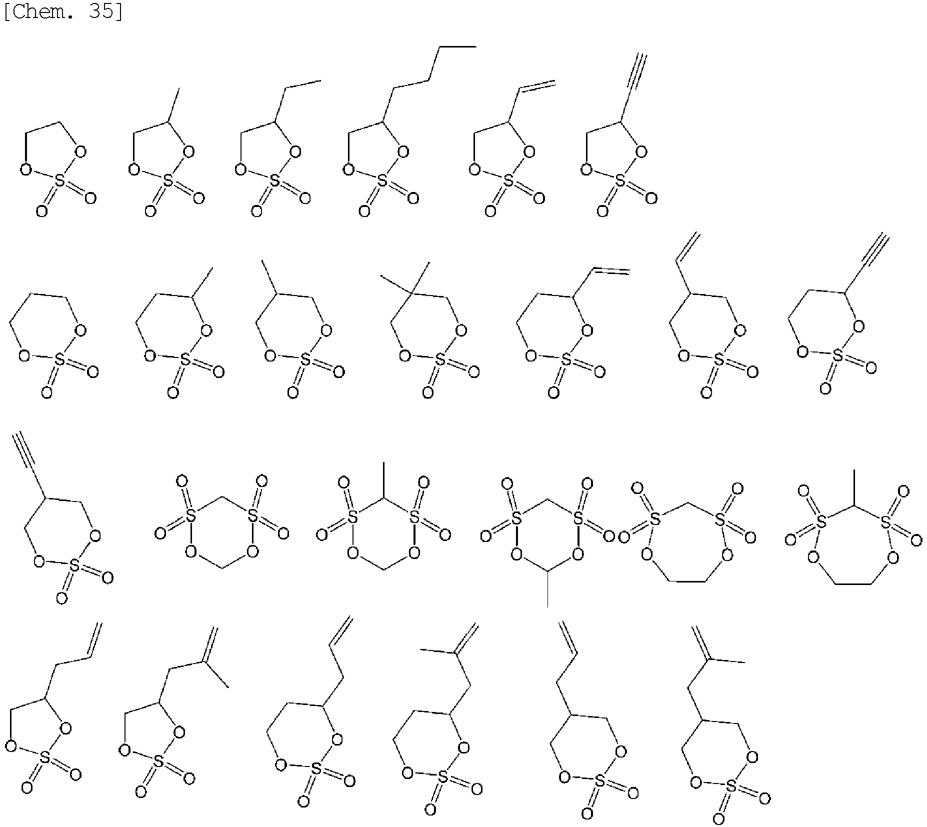

More preferred examples thereof include compounds shown below:

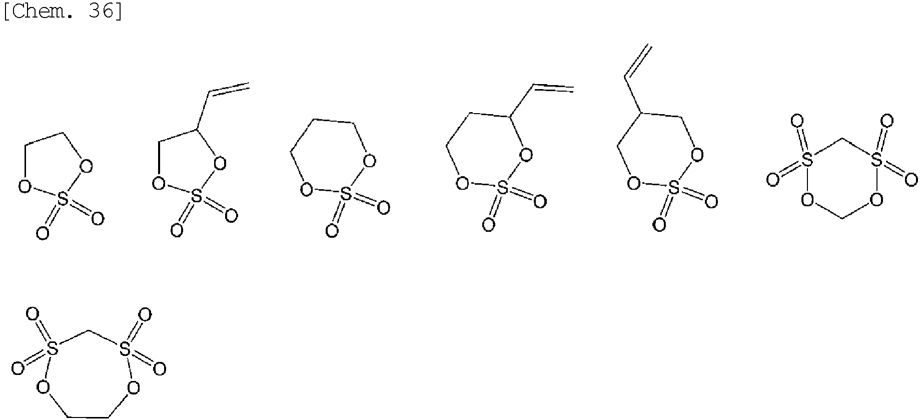

Particularly preferred examples thereof include compounds shown below:

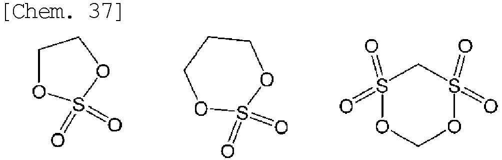

These compounds represented by General Formula (AA) may be used alone or in combination.

The content of the compound represented by General Formula (AA) (the total content if two or more compounds are used) relative to the total amount of the nonaqueous electrolytic solution according to one embodiment of the present invention is usually 1.0 × 10⁻³% by mass or more, preferably 1.0 × 10⁻²% by mass or more, more preferably 0.1% by mass or more, and is usually 10% by mass or less, preferably 5% by mass or less, more preferably 3% by mass or less, still more preferably 2% by mass or less, particularly preferably 1% by mass or less.

When the content of the compound(s) represented by General Formula (AA) relative to the total amount of the nonaqueous electrolytic solution falls within the above ranges, a battery can be prepared in which condensation of the compound to the active material(s) suitably progresses and gas generation during initial conditioning is further suppressed.

### <2-1-2. Compound represented by General Formula (αα)>

The nonaqueous electrolytic solution according to one embodiment of the present invention contains a compound represented by General Formula (αα): 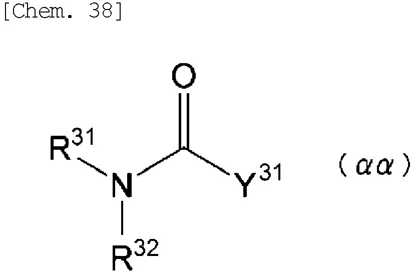 where in General Formula (αα), R³¹ and R³² each independently represent a hydrogen atom, a C₁ to C₁₂ hydrocarbon group, or a silyl group represented by -SiR³³R³⁴R³⁵; R³³ to R³⁵ each independently represent a hydrogen atom, a halogen atom, a C₁ to C₁₂ hydrocarbon group which may have a substituent, or a C₁ to C₁₂ alkoxy group which may have a substituent; Y³¹ represents a C₁ to C₁₂ alkoxy group which may have a substituent; R³¹ or R³² and Y³¹ may be bonded to each other to form a ring.

Hereinafter, R³¹ to R³², Y, and the like will be described.

In General Formula (αα), R³¹ and R³² each independently represent a hydrogen atom, a C₁ to C₁₂ hydrocarbon group, or a silyl group represented by -SiR³³R³⁴R³⁵ where R³³ to R³⁵ each independently represent a hydrogen atom, a halogen atom, a C₁ to C₁₂ hydrocarbon group which may have a substituent, or a C₁ to C₁₂ alkoxy group which may have a substituent.

The same descriptions as those defined for R¹ to R⁵ are applied to the C₁ to C₁₂ hydrocarbon group. For R³³ to R³⁵, the same descriptions as those defined for R³ to R⁵ are applied to the halogen atom, the C₁ to C₁₂ hydrocarbon group which may have a substituent, or the C₁ to C₁₂ alkoxy group which may have a substituent.

Among these, at least one of R³¹ and R³² is preferably a silyl group represented by -SiR³³R³⁴R³⁵.

In General Formula (αα), Y³¹ represents a C₁ to C₁₂ alkoxy group which may have a substituent. Especially, examples thereof include a methoxy group, an ethoxy group, a propoxy group, a butoxy group, an isopropoxy group, and the like. Among these, preferred are a methoxy group and an ethoxy group because these cause little steric hindrance and thus allow suitable concentration on the surface(s) of the active material(s).

Here, examples of the substituent include a cyano group, an isocyanato group, an oxo group (=O), acyl groups (-(C=O)-R^{d}), acyloxy groups (-O(C=O)-R^{d}), alkoxycarbonyl groups (-(C=O)O-R^{d}), sulfonyl groups (-SO₂-R^{d}), sulfonyloxy groups (-O(SO₂)-R^{d}), alkoxysulfonyl groups (-(SO₂)-O-R^{d}), alkoxysulfonyloxy groups (-O-(SO₂)-O-R^{d}), alkoxycarbonyloxy groups (-O-(C=O)-O-R^{d}), alkoxy groups (-O-R^{d}), an acrylic group, a methacrylic group, halogen atoms (preferably, a fluorine atom), a trifluoromethyl group, and the like. R^{d} represents a C₁ to C₁₀ alkyl group, a C₁ to C₁₀ alkylene group, a C₂ to C₁₀ alkenyl group, or a C₂ to C₁₀ alkynyl group. When R^{d} is a hydrocarbon group substituted by an alkylene group, the alkylene group may be bonded to its substituting hydrocarbon group to form a ring.

Among these substituents, preferred are a cyano group, an isocyanato group, an oxo group (=O), acyloxy groups (-O(C=O)-R^{d}), halogen atoms (preferably, a fluorine atom), and a trifluoromethyl group, more preferred are an oxo group (=O), an isocyanato group, acyloxy groups (-O(C=O)-R^{d}), halogen atoms (preferably, a fluorine atom), and a trifluoromethyl group, and particularly preferred are an oxo group (=O), acyloxy groups (-O(C=O)-R^{d}), halogen atoms (preferably, a fluorine atom), and a trifluoromethyl group.

Specific examples of the compound represented by General Formula (αα) include compounds shown below:

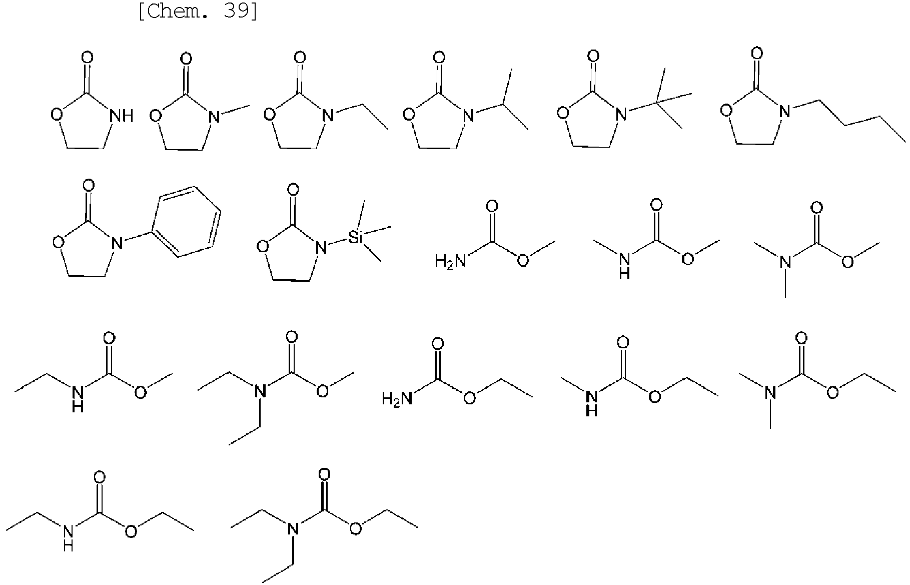

Preferred examples thereof include compounds shown below:

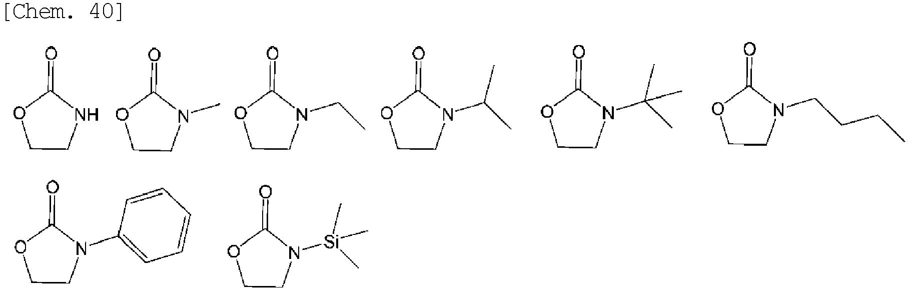

More preferred examples thereof include compounds shown below:

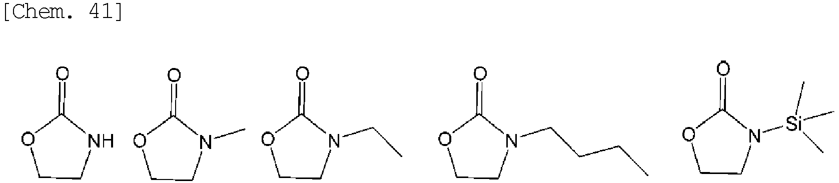

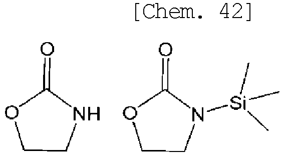

Still more preferred examples thereof include compounds shown below:

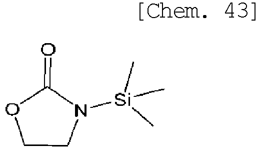

Particularly preferred examples thereof include compounds shown below:
These compounds represented by General Formula (αα) may be used alone or in combination.

The content of the compound represented by General Formula (αα) (the total content if two or more of them are used) relative to the total amount of the nonaqueous electrolytic solution according to one embodiment of the present invention is 0.01 mass ppm or more, preferably 0.1 mass ppm or more, more preferably 1.0 mass ppm or more, particularly preferably 10 mass ppm or more, and is 0.5% by mass or less, preferably 0.3% by mass or less.

When the content of the compound(s) represented by General Formula (αα) relative to the total amount of the nonaqueous electrolytic solution falls within the above ranges, a battery can be prepared in which condensation of the compound to the active material(s) suitably progresses and gas generation during initial conditioning is further suppressed.

Although the mass ratio of the content of the compound represented by General Formula (AA) to the content of the compound represented by General Formula (αα) (content of the compound represented by General Formula (AA)/content of the compound represented by General Formula (αα)) in the nonaqueous electrolytic solution is 2.0 or more, and is 1.0 × 10⁴ or less, preferably 7.0 × 10³ or less, more preferably 4.0 × 10³ or less, still more preferably 2.0 × 10³ or less, further still more preferably 1.0 × 10³ or less, particularly preferably 5.0 × 10² or less.

In this specification, the content of the compound means the content thereof when the nonaqueous electrolytic solution is produced, when the nonaqueous electrolytic solution is injected into a battery, or when the product is shipped as a battery. Identification of the compound represented by General Formula (αα) and the compound represented by General Formula (AA) in the nonaqueous electrolytic solution and measurement of the contents thereof are performed by nuclear magnetic resonance (NMR) spectroscopy, gas chromatography (GC), or the like.

### <2-1-3. Electrolyte>

The nonaqueous electrolytic solution according to the present embodiment usually contains an electrolyte as its component as in standard nonaqueous electrolytic solutions. The same description and preferred examples as those in <1-1-4. Electrolyte> are applied to the electrolyte used in the nonaqueous electrolytic solution according to the present embodiment.

### <2-1-4. Nonaqueous solvent>

As the main component, the nonaqueous electrolytic solution according to the present embodiment usually contains a nonaqueous solvent for dissolving the above-mentioned electrolyte as in standard nonaqueous electrolytic solutions. The same description and preferred examples as those in <1-1-5. Nonaqueous solvent> are applied to the nonaqueous solvent.

### <2-1-5. Aid>

The nonaqueous electrolytic solution according to the present embodiment may contain an aid in the range achieving the effects of the present invention. The same description and preferred examples as those in <1-1-6. Aid> are applied to the aid which may be used in the nonaqueous electrolytic solution according to the present embodiment.

### <2-2. Nonaqueous electrolytic solution battery>

The nonaqueous electrolytic solution battery according to one embodiment of the present invention is a nonaqueous electrolytic solution battery including a positive electrode, a negative electrode, and a nonaqueous electrolytic solution which is the above-mentioned nonaqueous electrolytic solution according to one embodiment of the present invention. More specifically, the nonaqueous electrolytic solution battery includes a positive electrode which has a current collector and a positive electrode active material layer formed on at least part of the surface of the current collector and is capable of absorbing and releasing metal ions, a negative electrode which has a current collector and a negative electrode active material layer formed on at least part of the surface of the current collector and is capable of absorbing and releasing metal ions, and the nonaqueous electrolytic solution which is a nonaqueous electrolytic solution comprising an alkali metal salt, a nonaqueous solvent, the compound represented by General Formula (AA), and the compound represented by General Formula (αα).

The same descriptions and preferred examples as those in <1-2-1. Battery configuration>, <1-2-3. Positive electrode>, <1-2-4. Negative electrode>, and <1-2-5. Separator> are applied to the battery configuration, the positive electrode, the negative electrode, and the separator.

### <2-2-1. Nonaqueous electrolytic solution>

The above-mentioned nonaqueous electrolytic solution according to one embodiment of the present invention is used as the nonaqueous electrolytic solution. To be noted, another nonaqueous electrolytic solution can be blended with the nonaqueous electrolytic solution in the range without departing the scope of the present invention as defined in the appended claims, and the mixed nonaqueous electrolytic solution can also be used.

### EXAMPLES

Hereinafter, the present invention will be more specifically described by way of Examples and Comparative Examples, but these Examples should not be construed as limitations to the present invention unless these depart from the scope of the present invention as defined in the appended claims.

### [Example 1]

Compounds used in Examples and Comparative Examples are shown below.

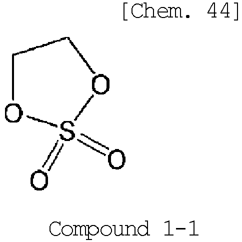

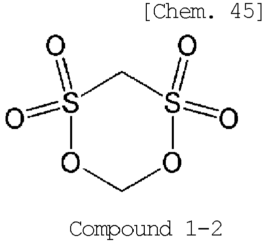

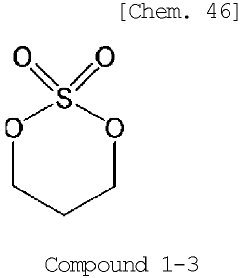

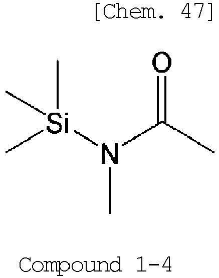

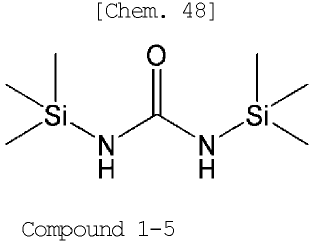

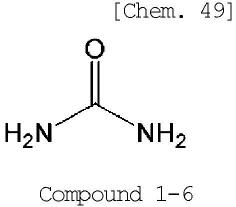

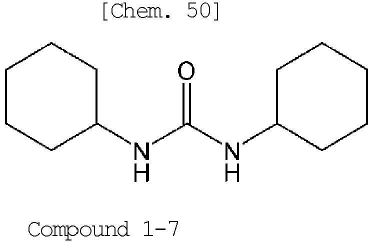

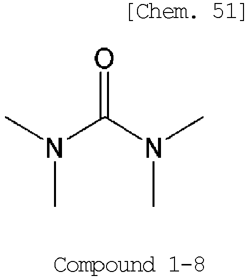

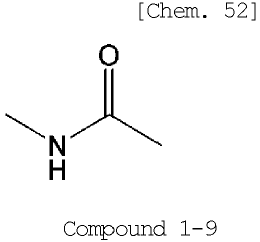

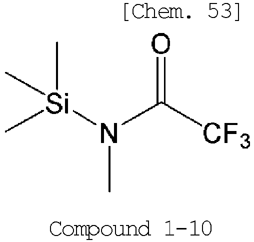

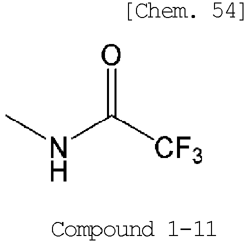

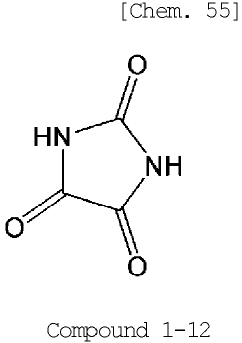

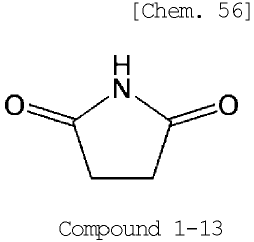

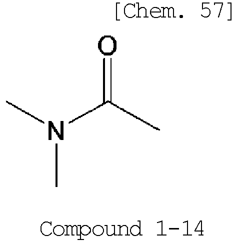

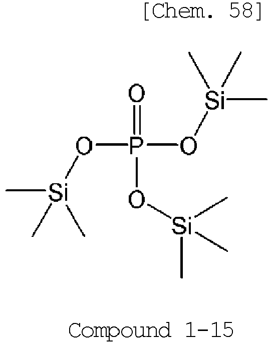

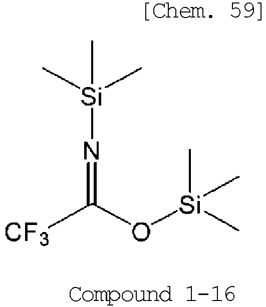

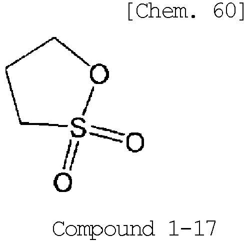

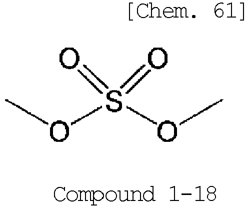

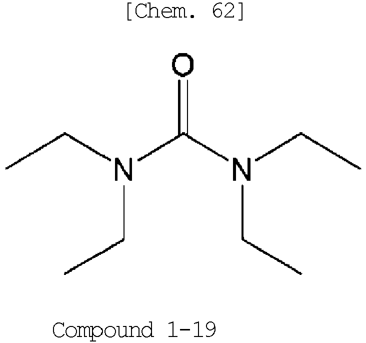

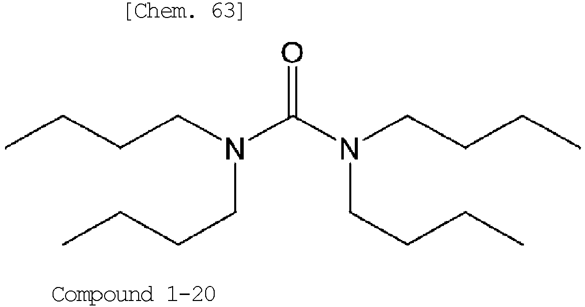

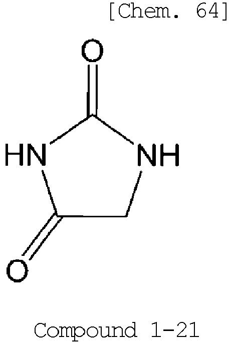

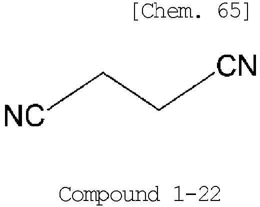

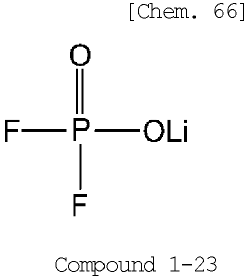

### <Examples 1-1 to 1-27, Comparative Examples 1-1 to 1-26>

### [Preparation of positive electrode]

90 Parts by mass of lithium·nickel·cobalt·manganese composite oxide (Li_{1.0}Ni_{0.5}Co_{0.2}Mn_{0.3}O₂) as a positive electrode active material, 7 parts by mass of acetylene black as a conductive material, and 3 parts by mass of polyvinylidene fluoride (PVdF) as a binder were mixed in an N-methylpyrrolidone solvent with a disperser to form a slurry. The slurry was uniformly applied to both surfaces of an aluminum foil having a thickness of 15 µm, and was dried, followed by pressing to prepare a positive electrode.

### [Preparation of negative electrode]

1 Part by mass of an aqueous dispersion of sodium carboxymethyl cellulose (concentration of sodium carboxymethyl cellulose: 1% by mass) as a thickener and 1 part by mass of an aqueous dispersion of styrene-butadiene rubber (concentration of styrene-butadiene rubber: 50% by mass) as a binder were added to 98 parts by mass of natural graphite, and were mixed with a disperser to form a slurry. The resulting slurry was applied to one surface of a copper foil having a thickness of 10 µm, and was dried, followed by pressing to prepare a negative electrode.

### [Preparation of nonaqueous electrolytic solution]

Under a dry argon atmosphere, 1.2 mol/L (14.8% by mass, concentration in the nonaqueous electrolytic solution) of sufficiently dried LiPF₆ as an electrolyte was dissolved in a mixture of ethylene carbonate (EC), diethyl carbonate (DEC), and ethyl methyl carbonate (EMC) (volume ratio EC:DEC:EMC = 3:3:4). Vinylene carbonate (VC) and fluoroethylene carbonate (FEC) were further added each in an amount of 2.0% by mass (as the concentration in the nonaqueous electrolytic solution) (hereinafter, referred to as Reference electrolytic solution 1). Compounds 1-1 to 1-23 were added to Reference electrolytic solution 1 in amounts shown in Table 1 below to prepare nonaqueous electrolytic solutions in Examples 1-1 to 1-27 and Comparative Examples 1-2 to 1-26. In the table, "Content (mass%)" indicates a content in the entire nonaqueous electrolytic solution which is regarded as 100% by mass. The nonaqueous electrolytic solution in Comparative Example 1-1 is Reference electrolytic solution 1.

### [Production of nonaqueous electrolytic solution battery]

The positive electrode, the negative electrode, and a separator made of polyethylene were laminated in order of the negative electrode, the separator, and the positive electrode to prepare a battery element. The battery element was inserted into bags each made of a laminate film of aluminum (thickness: 40 µm) having surfaces coated with a resin layer such that the terminal of the positive electrode and that of the negative electrode were projected therefrom. Thereafter, the nonaqueous electrolytic solutions after the preparation above were injected into the bags, which were sealed in vacuum to prepare laminate-type nonaqueous electrolytic solution batteries.

### <Evaluation of nonaqueous electrolytic solution battery>

### [Initial conditioning]

In a 25°C thermostat, the laminate-type batteries were charged at a constant current corresponding to 0.05 C for 6 hours, and then were discharged at 0.2 C to 3.0 V. The batteries were CC-CV charged at 0.2 C to 4.1 V. Subsequently, the batteries were aged at 45°C for 72 hours. Thereafter, the batteries were discharged at 0.2 C to 3.0 V to stabilize the batteries. Further, the batteries were CC-CV charged at 0.2 C to 4.2 V, and then discharged at 0.2 C to 3.0 V. Thus, initial conditioning was performed.

### [Measurement of initial gas amount]

For each of the batteries, the battery was immersed in an ethanol bath before and after the initial conditioning to measure the volumes. From the change in volume before and after the initial conditioning, the amount of generated gas was determined, and was defined as "initial gas amount". The values of the initial gas amounts in Examples and Comparative Examples where the initial gas amount in Comparative Example 1-1 is 100 are shown as "Initial gas" in Table 1. In Table 1, "Compound (A)" represents the "compound represented by General Formula (A)", and "Compound (α) " represents the "compound represented by General Formula (α)". Examples 1-6, 1-8, 1-9, 1-10, 1-11, 1-12, 1-13, 1-14 and 1-15 are Reference Examples.

### [Table 1]

**Table 1**

| | Compound (A) | Content (mass%) | Compound (α) | Content (mass%) | Others | Content (mass%) | Initial gas |
|---|---|---|---|---|---|---|---|
| Example 1-1 | Compound 1-1 | 1.0 | Compound 1-4 | 0.1 | - | - | 55 |
| Example 1-2 | Compound 1-1 | 1.0 | Compound 1-5 | 0.1 | - | - | 65 |
| Example 1-3 | Compound 1-1 | 1.0 | Compound 1-5 | 0.3 | - | - | 62 |
| Example 1-4 | Compound 1-1 | 1.0 | Compound 1-5 | 0.5 | - | - | 60 |
| Example 1-5 | Compound 1-1 | 1.0 | Compound 1-6 | 0.1 | - | - | 80 |
| Example 1-6 | Compound 1-1 | 1.0 | Compound 1-7 | 0.3 | - | - | 76 |
| Example 1-7 | Compound 1-1 | 1.0 | Compound 1-8 | 0.3 | - | - | 68 |
| Example 1-8 | Compound 1-1 | 1.0 | Compound 1-9 | 0.1 | - | - | 92 |
| Example 1-9 | Compound 1-1 | 1.0 | Compound 1-9 | 0.3 | - | - | 78 |
| Example 1-10 | Compound 1-1 | 1.0 | Compound 1-10 | 0.1 | - | - | 71 |
| Example 1-11 | Compound 1-1 | 1.0 | Compound 1-10 | 0.3 | - | - | 35 |
| Example 1-12 | Compound 1-1 | 1.0 | Compound 1-11 | 0.3 | - | - | 67 |
| Example 1-13 | Compound 1-1 | 1.0 | Compound 1-12 | 0.3 | - | - | 60 |
| Example 1-14 | Compound 1-1 | 1.0 | Compound 1-13 | 0.3 | - | - | 56 |
| Example 1-15 | Compound 1-1 | 1.0 | Compound 1-14 | 0.1 | - | - | 83 |
| Example 1-16 | Compound 1-2 | 1.0 | Compound 1-5 | 0.1 | - | - | 94 |
| Example 1-17 | Compound 1-3 | 1.0 | Compound 1-5 | 0.1 | - | - | 58 |
| Example 1-18 | Compound 1-1 | 1.0 | Compound 1-19 | 0.05 | - | - | 75 |
| Example 1-19 | Compound 1-1 | 1.0 | Compound 1-19 | 0.1 | - | - | 77 |
| Example 1-20 | Compound 1-1 | 1.0 | Compound 1-20 | 0.08 | - | - | 63 |
| Example 1-21 | Compound 1-1 | 1.0 | Compound 1-6 | 0.035 | - | - | 84 |
| Example 1-22 | Compound 1-1 | 1.0 | Compound 1-8 | 0.035 | - | - | 66 |
| Example 1-23 | Compound 1-1 | 1.0 | Compound 1-8 | 0.07 | - | - | 74 |
| Example 1-24 | Compound 1-1 | 1.0 | Compound 1-21 | 0.1 | - | - | 68 |
| Example 1-25 | Compound 1-1 | 1.0 | Compound 1-6 | 0.035 | Compound 1-23 | 1.0 | 73 |
| Example 1-26 | Compound 1-1 | 1.0 | Compound 1-8 | 0.07 | Compound 1-23 | 1.0 | 66 |
| Example 1-27 | Compound 1-1 | 1.0 | Compound 1-19 | 0.1 | Compound 1-23 | 1.0 | 65 |
| Comparative Example 1-1 | - | - | - | - | - | - | 100 |
| Comparative Example 1-2 | Compound 1-1 | 1.0 | - | - | - | - | 101 |
| Comparative Example 1-3 | - | - | Compound 1-4 | 0.1 | - | - | 103 |
| Comparative Example 1-4 | - | - | Compound 1-5 | 0.1 | - | - | 206 |
| Comparative Example 1-5 | - | - | Compound 1-10 | 0.1 | Compound 1-15 | 1.0 | 176 |
| Comparative Example 1-6 | - | - | Compound 1-5 | 1.0 | - | - | 139 |
| | | | Compound 1-10 | 0.1 | | | |
| Comparative Example 1-7 | - | - | Compound 1-10 | 0.1 | Compound 1-16 | 1.0 | 127 |
| Comparative Example 1-8 | - | - | Compound 1-5 | 0.1 | Compound 1-17 | 1.0 | 106 |
| Comparative Example 1-9 | - | - | Compound 1-5 | 0.1 | Compound 1-18 | 1.0 | 130 |
| Comparative Example 1-10 | - | - | Compound 1-6 | 0.1 | - | - | 215 |
| Comparative Example 1-11 | - | - | Compound 1-7 | 0.3 | - | - | 128 |
| Comparative Example 1-12 | - | - | Compound 1-8 | 0.3 | - | - | 158 |
| Comparative Example 1-13 | - | - | Compound 1-9 | 0.1 | - | - | 113 |
| Comparative Example 1-14 | - | - | Compound 1-9 | 0.5 | - | - | 175 |
| Comparative Example 1-15 | - | - | Compound 1-10 | 0.1 | - | - | 107 |
| Comparative Example 1-16 | - | - | Compound 1-11 | 0.1 | - | - | 106 |
| Comparative Example 1-17 | - | - | Compound 1-11 | 0.5 | - | - | 155 |
| Comparative Example 1-18 | - | - | Compound 1-12 | 0.3 | - | - | 162 |
| Comparative Example 1-19 | - | - | Compound 1-13 | 0.3 | - | - | 147 |
| Comparative Example 1-20 | - | - | Compound 1-14 | 0.1 | - | - | 121 |
| Comparative Example 1-21 | - | - | Compound 1-19 | 0.1 | - | - | 179 |
| Comparative Example 1-22 | - | - | Compound 1-20 | 0.1 | - | - | 144 |
| Comparative Example 1-23 | - | - | Compound 1-21 | 0.3 | - | - | 209 |
| Comparative Example 1-24 | Compound 1-1 | 1.0 | - | - | Compound 1-22 | 1.0 | 109 |
| Comparative Example 1-25 | Compound 1-2 | 1.0 | - | - | - | - | 115 |
| Comparative Example 1-26 | Compound 1-3 | 1.0 | - | - | - | - | 110 |

Table 1 clearly shows that the initial gas amounts in the batteries produced in Examples 1-1 to 1-27 were smaller than those in the batteries produced in Comparative Examples 1-1 to 1-26.

Comparison between Comparative Example 1-1 and Comparative Examples 1-2, 1-25, and 1-26 shows that when the nonaqueous electrolytic solutions containing only the compound represented by General Formula (A) but not the compound represented by General Formula (α) were used, their initial gas amounts tended to be larger than that in Comparative Example 1. Similarly, comparison between Comparative Example 1-1 and Comparative Examples 1-3, 1-4, 1-6, and 1-10 to 1-23 shows that when the nonaqueous electrolytic solutions containing only the compound represented by General Formula (α) but not the compound represented by General Formula (A) were used, the initial gas amounts tended to be larger than that in Comparative Example 1-1.

The results in Comparative Examples 1-1 to 1-3 led to a prediction that the initial gas amount in the battery including the electrolytic solution containing the combination of compounds in Example 1-1 would be increased compared to that in Comparative Example 1-1, but the generated initial gas amount in the battery in Example 1-1 was remarkably suppressed compared to that in Comparative Example 1-1.

The results in Comparative Examples 1-1, 1-2, and 1-4 led to a prediction that the initial gas amount in the battery including the electrolytic solution containing the combination of compounds in Example 1-2 would be remarkably increased compared to that in Comparative Example 1-1, but the generated initial gas amount in the battery in Example 1-2 was remarkably suppressed compared to that in Comparative Example 1-1.

The results in Comparative Examples 1-1, 1-2, and 1-10 led to a prediction that the initial gas amount in the battery including the electrolytic solution containing the combination of compounds in Example 1-5 would be remarkably increased compared to that in Comparative Example 1-1, but the generated initial gas amount in the battery in Example 1-5 was significantly suppressed compared to that in Comparative Example 1-1.

The results in Comparative Examples 1-1, 1-2, and 1-11 led to a prediction that the initial gas amount in the battery including the electrolytic solution containing the combination of compounds in Example 1-6 would be increased compared to that in Comparative Example 1-1, but the generated initial gas amount in the battery in Example 1-6 was significantly suppressed compared to that in Comparative Example 1-1.

The results in Comparative Examples 1-1, 1-2, and 1-12 led to a prediction that the initial gas amount in the battery including the electrolytic solution containing the combination of compounds in Example 1-7 would be remarkably increased compared to that in Comparative Example 1-1, but the generated initial gas amount in the battery in Example 1-7 was significantly suppressed compared to that in Comparative Example 1-1.

The results in Comparative Examples 1-1, 1-2, and 1-13 led to a prediction that the initial gas amount in the battery including the electrolytic solution containing the combination of compounds in Example 1-8 would be increased compared to that in Comparative Example 1-1, but the generated initial gas amount in the battery in Example 1-8 was suppressed compared to that in Comparative Example 1-1.

The results in Comparative Examples 1-1, 1-2, and 1-15 led to a prediction that the initial gas amount in the battery including the electrolytic solution containing the combination of compounds in Example 1-10 would be increased compared to that in Comparative Example 1-1, but the generated initial gas amount in the battery in Example 1-10 was significantly suppressed compared to that in Comparative Example 1-1.

The results in Comparative Examples 1-1, 1-2, and 1-18 led to a prediction that the initial gas amount in the battery including the electrolytic solution containing the combination of compounds in Example 1-13 would be significantly increased compared to that in Comparative Example 1-1, but the generated initial gas amount in the battery in Example 1-13 was remarkably suppressed compared to that in Comparative Example 1-1.

The results in Comparative Examples 1-1, 1-2, and 1-19 led to a prediction that the initial gas amount in the battery including the electrolytic solution containing the combination of compounds in Example 1-14 would be increased compared to that in Comparative Example 1-1, but the generated initial gas amount in the battery in Example 1-14 was suppressed compared to that in Comparative Example 1-1.

The results in Comparative Examples 1-1, 1-2, and 1-20 led to a prediction that the initial gas amount in the battery including the electrolytic solution containing the combination of compounds in Example 1-15 would be significantly increased compared to that in Comparative Example 1-1, but the generated initial gas amount in the battery in Example 1-15 was remarkably suppressed compared to that in Comparative Example 1-1.

The results in Comparative Examples 1-1, 1-2, and 1-21 led to a prediction that the initial gas amount in the battery including the electrolytic solution containing the combination of compounds in Example 1-19 would be significantly increased compared to that in Comparative Example 1-1, but the generated initial gas amount in the battery in Example 1-19 was remarkably suppressed compared to that in Comparative Example 1-1.

The results in Comparative Examples 1-1, 1-2, and 1-22 led to a prediction that the initial gas amount in the battery including the electrolytic solution containing the combination of compounds in Example 1-20 would be significantly increased compared to that in Comparative Example 1-1, but the generated initial gas amount in the battery in Example 1-20 was remarkably suppressed compared to that in Comparative Example 1-1.

The results in Comparative Examples 1-1, 1-2, and 1-23 led to a prediction that the initial gas amount in the battery including the electrolytic solution containing the combination of compounds in Example 1-24 would be significantly increased compared to that in Comparative Example 1-1, but the generated initial gas amount in the battery in Example 1-24 was remarkably suppressed compared to that in Comparative Example 1-1.

The results in Comparative Example 1-1, 1-4 and 1-25 led to a prediction that the initial gas amount in the battery including the electrolytic solution containing the combination of compounds in Example 1-16 would be significantly increased compared to that in Comparative Example 1-1, the generated initial gas amount in the battery in Example 1-16 was suppressed compared to that in Comparative Example 1-1.

The results in Comparative Example 1-1, 1-4 and 1-26 led to a prediction that the initial gas amount in the battery including the electrolytic solution containing the combination of compounds in Example 1-17 would be significantly increased compared to that in Comparative Example 1-1, but the generated initial gas amount in the battery in Example 1-17 was remarkably suppressed compared to that in Comparative Example 1-1.

Moreover, comparison between Examples 1-21, 1-23, and 1-24 and Examples 1-25, 1-26, and 1-27 shows that further addition of lithium difluorophosphate as a specific anion-containing compound further improved the effect of suppressing the generated initial gas amount.

Unlike the batteries including the electrolytic solutions each containing a combination of the compound represented by General Formula (α) and the compound represented by General Formula (A), in Comparative Examples 1-5 and 1-7 to 1-9 where the compound represented by General Formula (α) was used in combination with a compound not corresponding to the compound represented by General Formula (A), the initial gas amount was increased compared to that in Comparative Example 1-1.

Unlike the batteries including the electrolytic solutions each containing a combination of the compound represented by General Formula (α) and the compound represented by General Formula (A), in Comparative Example 1-24 where the compound represented by General Formula (A) was used in combination with a compound not corresponding to the compound represented by General Formula (α), the initial gas amount was increased compared to that in Comparative Example 1-1.

In the batteries in Examples 1-1 to 1-27, it is inferred that the compounds localized on the electrode(s) during initial charging as a result of suitable adsorption of the compound represented by General Formula (α) and the compound represented by General Formula (A) onto the positive electrode active material and/or the negative electrode active material were electrochemically decomposed to form a composite insulating coating film on the surface(s) of the positive electrode active material and/or the negative electrode active material.

As shown in these results, adsorption of the compounds onto the electrode(s) can be controlled by a combination use of the compound represented by General Formula (α) and the compound represented by General Formula (A), suitably suppressing the initial gas generation amount.

### [Example 2]

The compounds used in Examples and Comparative Examples are shown below.

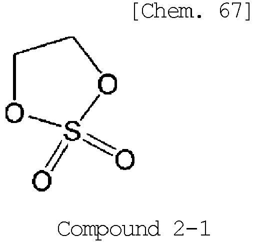

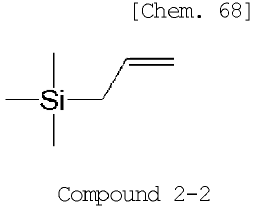

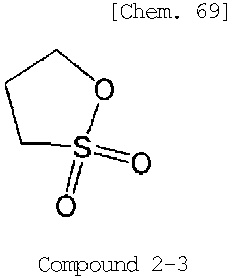

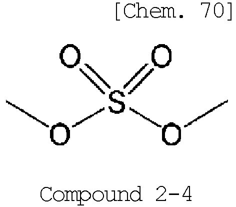

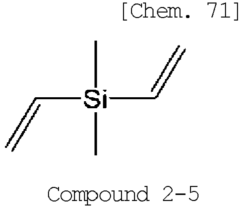

### <Example 2-1, Comparative Examples 2-1 to 2-6>

### [Preparation of positive electrode]

90 Parts by mass of lithium·nickel·cobalt·manganese composite oxide (Li_{1.0}Ni_{0.5}Co_{0.2}Mn_{0.3}O₂) as a positive electrode active material, 7 parts by mass of acetylene black as a conductive material, and 3 parts by mass of polyvinylidene fluoride (PVdF) as a binder were mixed in an N-methylpyrrolidone solvent with a disperser to form a slurry. The slurry was uniformly applied to both surfaces of an aluminum foil having a thickness of 15 µm, and was dried, followed by pressing to prepare a positive electrode.

### [Preparation of negative electrode]

1 Part by mass of an aqueous dispersion (concentration of sodium carboxymethyl cellulose: 1% by mass) of sodium carboxymethyl cellulose as a thickener and 1 part by mass of an aqueous dispersion of styrene-butadiene rubber (concentration of styrene-butadiene rubber: 50% by mass) as a binder were added to 98 parts by mass of natural graphite with a disperser to form a slurry. The resulting slurry was applied to one surface of a copper foil having a thickness of 10 µm, and was dried, followed by pressing to prepare a negative electrode.

### [Preparation of nonaqueous electrolytic solution]

Under a dry argon atmosphere, 1.2 mol/L (14.8% by mass, concentration in the nonaqueous electrolytic solution) of sufficiently dried LiPF₆ as an electrolyte was dissolved in a mixture of ethylene carbonate (EC), diethyl carbonate (DEC), and ethyl methyl carbonate (EMC) (volume ratio EC:DEC:EMC = 3:3:4). Vinylene carbonate (VC) and fluoroethylene carbonate (FEC) were further added each in an amount of 2.0% by mass (as the concentration in the nonaqueous electrolytic solution) (hereinafter, referred to as Reference electrolytic solution 2). Compounds 2-1 to 2-5 were added to Reference electrolytic solution 2 in amounts shown in Table 2 below to prepare nonaqueous electrolytic solutions in Example 2-1 and Comparative Examples 2-1 to 2-6. In the table, "Content (mass%)" indicates a content in the entire nonaqueous electrolytic solution which is regarded as 100% by mass. The nonaqueous electrolytic solution in Comparative Example 2-1 is Reference electrolytic solution 2.

### [Production of nonaqueous electrolytic solution battery]

The positive electrode, the negative electrode, and a separator made of polyethylene were laminated in order of the negative electrode, the separator, and the positive electrode to prepare a battery element. The battery element was inserted into bags each made of a laminate film of aluminum (thickness: 40 µm) having surfaces coated with a resin layer such that the terminal of the positive electrode and that of the negative electrode were projected therefrom. Thereafter, the nonaqueous electrolytic solutions after the preparation above were injected into the bags, which were sealed in vacuum to prepare laminate-type nonaqueous electrolytic solution batteries.

### <Evaluation of nonaqueous electrolytic solution battery>

### [Initial conditioning]

In a 25°C thermostat, the laminate-type batteries were charged at a constant current corresponding to 0.05 C for 6 hours, and then were discharged at 0.2 C to 3.0 V. The batteries were CC-CV charged at 0.2 C to 4.1 V. Subsequently, the batteries were aged at 45°C for 72 hours. Thereafter, the batteries were discharged at 0.2 C to 3.0 V to stabilize the batteries. Further, the batteries were CC-CV charged at 0.2 C to 4.2 V, and then discharged at 0.2 C to 3.0 V. Thus, initial conditioning was performed.

### [Measurement of initial gas amount]

For each of the batteries, the battery was immersed in an ethanol bath before and after the initial conditioning to measure the volumes. From the change in volume before and after the initial conditioning, the amount of generated gas was determined, and was defined as "initial gas amount". The values of the initial gas amounts in Examples and Comparative Examples where the initial gas amount in Comparative Example 2-1 is 100 are shown as "Initial gas" in Table 2. In Table 2, "Compound (A)" represents the "compound represented by General Formula (A)", and "Compound (β)" represents the "compound represented by General Formula (β)".

### [Table 2]

**Table 2**

| | Compound (A) | Content (mass%) | Compound (β) | Content (mass%) | Others | Content (mass%) | Initial gas |
|---|---|---|---|---|---|---|---|
| Example 2-1 | Compound 2-1 | 1.0 | Compound 2-2 | 0.1 | - | - | 82 |
| Comparative Example 2-1 | - | - | - | - | - | - | 100 |
| Comparative Example 2-2 | Compound 2-1 | 1.0 | - | - | - | - | 101 |
| Comparative Example 2-3 | - | - | Compound 2-2 | 0.1 | - | - | 113 |
| Comparative Example 2-4 | - | - | Compound 2-2 | 0.1 | Compound 2-3 | 1.0 | 110 |
| Comparative Example 2-5 | - | - | Compound 2-2 | 0.1 | Compound 2-4 | 1.0 | 133 |
| Comparative Example 2-6 | Compound 2-1 | 1.0 | - | - | Compound 2-5 | 0.1 | 115 |

Table 2 clearly shows that the initial gas amount in the battery produced in Example 2-1 was smaller than those in the batteries produced in Comparative Examples 2-1 to 2-6.

As shown in these results, adsorption of the compounds onto the electrode(s) can be controlled by a combination use of the compound represented by General Formula (β) and the compound represented by General Formula (A), suitably suppressing the initial gas generation amount.

### [Example 3]

The compounds used in Examples and Comparative Examples are shown below.

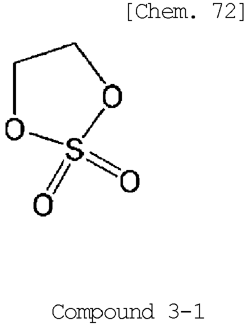

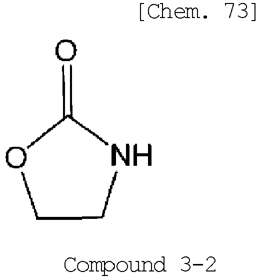

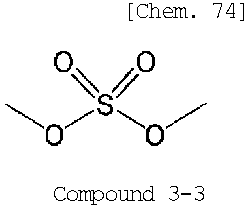

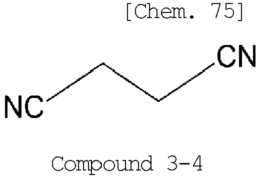

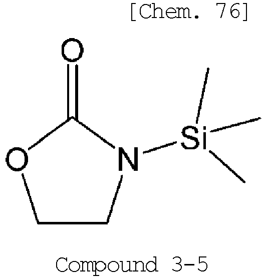

### <Examples 3-1 to 3-3, Comparative Examples 3-1 to 3-6>

### [Preparation of positive electrode]

90 Parts by mass of lithium·nickel·cobalt·manganese composite oxide (Li_{1.0}Ni_{0.5}Co_{0.2}Mn_{0.3}O₂) as a positive electrode active material, 7 parts by mass of acetylene black as a conductive material, and 3 parts by mass of polyvinylidene fluoride (PVdF) as a binder were mixed in an N-methylpyrrolidone solvent with a disperser to form a slurry. The slurry was uniformly applied to both surfaces of an aluminum foil having a thickness of 15 µm, and was dried, followed by pressing to prepare a positive electrode.

### [Preparation of negative electrode]

1 Part by mass of an aqueous dispersion (concentration of sodium carboxymethyl cellulose: 1% by mass) of sodium carboxymethyl cellulose as a thickener and 1 part by mass of an aqueous dispersion of styrene-butadiene rubber (concentration of styrene-butadiene rubber: 50% by mass) as a binder were added to 98 parts by mass of natural graphite with a disperser to form a slurry. The resulting slurry was applied to one surface of a copper foil having a thickness of 10 µm, and was dried, followed by pressing to prepare a negative electrode.

### [Preparation of nonaqueous electrolytic solution]

Under a dry argon atmosphere, 1.2 mol/L (14.8% by mass, concentration in the nonaqueous electrolytic solution) of sufficiently dried LiPF₆ as an electrolyte was dissolved in a mixture of ethylene carbonate (EC), diethyl carbonate (DEC), and ethyl methyl carbonate (EMC) (volume ratio EC:DEC:EMC = 3:3:4). Vinylene carbonate (VC) and fluoroethylene carbonate (FEC) were further added each in an amount of 2.0% by mass (as the concentration in the nonaqueous electrolytic solution) (hereinafter, referred to as Reference electrolytic solution 3). Compounds 3-1 to 3-5 were added to Reference electrolytic solution 3 in amounts shown in Table 3 below to prepare nonaqueous electrolytic solutions in Examples 3-1 to 3-3 and Comparative Examples 3-1 to 3-6. In the table, "Content (mass%)" indicates a content in the entire nonaqueous electrolytic solution which is regarded as 100% by mass. The nonaqueous electrolytic solution in Comparative Example 3-1 is Reference electrolytic solution 3.

### [Production of nonaqueous electrolytic solution battery]

The positive electrode, the negative electrode, and a separator made of polyethylene were laminated in order of the negative electrode, the separator, and the positive electrode to prepare a battery element. The battery element was inserted into bags each made of a laminate film of aluminum (thickness: 40 µm) having surfaces coated with a resin layer such that the terminal of the positive electrode and that of the negative electrode were projected therefrom. Thereafter, the nonaqueous electrolytic solutions after the preparation above were injected into the bags, which were sealed in vacuum to prepare laminate-type nonaqueous electrolytic solution batteries.

### <Evaluation of nonaqueous electrolytic solution battery>

### [Initial conditioning]

In a 25°C thermostat, the laminate-type batteries were charged at a constant current corresponding to 0.05 C for 6 hours, and then were discharged at 0.2 C to 3.0 V. The batteries were CC-CV charged at 0.2 C to 4.1 V. Subsequently, the batteries were aged at 45°C for 72 hours. Thereafter, the batteries were discharged at 0.2 C to 3.0 V to stabilize the laminate-type batteries. Further, the batteries were CC-CV charged at 0.2 C to 4.2 V, and then discharged at 0.2 C to 3.0 V. Thus, initial conditioning was performed.

### [Measurement of initial gas amount]

For each of the batteries, the battery was immersed in an ethanol bath before and after the initial conditioning to measure the volumes. From the change in volume before and after the initial conditioning, the amount of generated gas was determined, and was defined as "initial gas amount". The values of the initial gas amounts in Examples and Comparative Examples where the initial gas amount in Comparative Example 3-1 is 100 are shown as "Initial gas" in Table 3. In Table 3, "Compound (AA)" represents the "compound represented by General Formula (AA)", and "Compound (αα) " represents the "Compound represented by General Formula (αα)".

### [Table 3]

**Table 3**

| | Compound (AA) | Content (mass%) | Compound (αα) | Content (mass%) | Others | Content (mass%) | Initial gas |
|---|---|---|---|---|---|---|---|
| Example 3-1 | Compound 3-1 | 1.0 | Compound 3-2 | 0.3 | - | - | 90 |
| Example 3-2 | Compound 3-1 | 1.0 | Compound 3-5 | 0.1 | - | - | 70 |
| Example 3-3 | Compound 3-1 | 1.0 | Compound 3-5 | 0.3 | - | - | 82 |
| Comparative Example 3-1 | - | - | - | - | - | - | 100 |
| Comparative Example 3-2 | Compound 3-1 | 1.0 | - | - | - | - | 101 |
| Comparative Example 3-3 | - | - | Compound 3-2 | 0.3 | - | - | 132 |
| Comparative Example 3-4 | - | - | Compound 3-2 | 0.3 | Compound 3-3 | 1.0 | 122 |
| Comparative Example 3-5 | Compound 3-1 | 1.0 | - | - | Compound 3-4 | 1.0 | 109 |
| Comparative Example 3-6 | - | - | Compound 3-5 | 0.3 | - | - | 110 |

Table 3 clearly shows that the initial gas amounts in the batteries produced in Examples 3-1 to 3-3 were smaller than those in the batteries produced in Comparative Examples 3-1 to 3-6.

As shown in these results, adsorption of the compounds onto the electrode(s) can be controlled by a combination use of the compound represented by General Formula (αα) and the compound represented by General Formula (AA), suitably suppressing the initial gas generation amount.

### INDUSTRIAL APPLICABILITY

The nonaqueous electrolytic solution according to the present invention enables a suppression in gas generation amount during the initial conditioning of nonaqueous electrolytic solution batteries to suppress degradation of batteries having higher capacity, and is useful.

The nonaqueous electrolytic solution according to the present invention and the nonaqueous electrolytic solution battery containing this nonaqueous electrolytic solution can be used in a variety of known applications in which nonaqueous electrolytic solution batteries are used. Specific examples thereof include laptop computers, stylus-operated personal computers, mobile personal computers, electronic book players, mobile phones, mobile fax machines, mobile copiers, mobile printers, headphone stereos, video movie cameras, liquid crystal television sets, handy cleaners, portable CDs, mini disks, transceivers, electronic notebooks, desktop calculators, memory cards, mobile tape recorders, radios, backup power supplies, motors, motorcycles, motorized bicycles, bicycles, lighting apparatuses, toys, game machines, watches and clocks, power tools, electronic flashes, cameras, household backup power supplies, office backup power supplies, load balancing power supplies, natural energy-storing power supplies, and the like.

## Claims

1. A nonaqueous electrolytic solution for a nonaqueous electrolytic solution battery including a positive electrode and a negative electrode which are capable of absorbing and releasing metal ions, the nonaqueous electrolytic solution comprising an alkali metal salt, a nonaqueous solvent, a compound represented by General Formula (A), and at least one of a compound represented by General Formula (α) and a compound represented by General Formula (β),
wherein the compound represented by General Formula (α) is at least one compound selected from the group consisting of compounds represented by formulas (α1) to (α15): 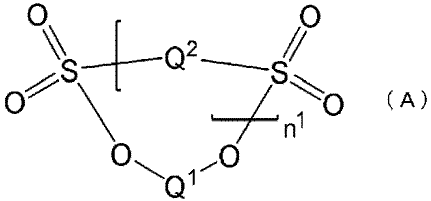 where in General Formula (A),
Q¹ and Q² each independently represent a C₁ to C₁₀ alkylene group which may have a substituent;
n¹ represents an integer of 0 or 1; and when n¹ is 0, the sulfur atom and the oxygen atom are directly bonded to each other; 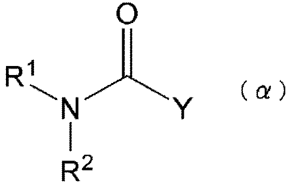 where in General Formula (α),
R¹ and R² each independently represent a hydrogen atom, a C₁ to C₁₂ hydrocarbon group, or a silyl group represented by -SiR³R⁴R⁵;
R³ to R⁵ each independently represent a hydrogen atom, a halogen atom, a C₁ to C₁₂ hydrocarbon group which may have a substituent, or a C₁ to C₁₂ alkoxy group which may have a substituent;
Y represents a hydrogen atom, a halogen atom, a C₁ to C₁₂ hydrocarbon group which may have a substituent, a group represented by -NR⁶-SiR⁷R⁸R⁹, or a group represented by -NR¹⁰-R¹¹;
R⁶, R¹⁰, and R¹¹ each independently represent a hydrogen atom or a C₁ to C₁₂ hydrocarbon group which may have a substituent;
R⁷ to R⁹ each independently represent a hydrogen atom, a halogen atom, a C₁ to C₁₂ hydrocarbon group which may have a substituent, or a C₁ to C₁₂ alkoxy group which may have a substituent; and
R¹ or R² and Y may be bonded to each other to form a ring; 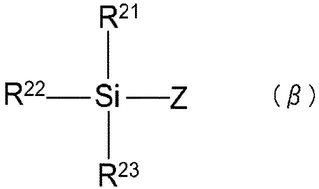 where in General Formula (β),
R²¹ to R²³ each independently represent a hydrogen atom, a C₁ to C₁₀ alkyl group which may have a substituent, a C₆ to C₁₈ aryl group, or a C₇ to C₁₈ aralkyl group; and
Z represents a C₂ to C₁₀ alkenyl or alkynyl group which may have a substituent;

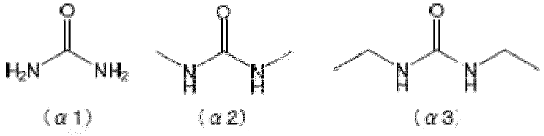

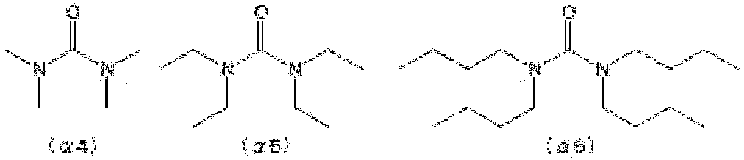

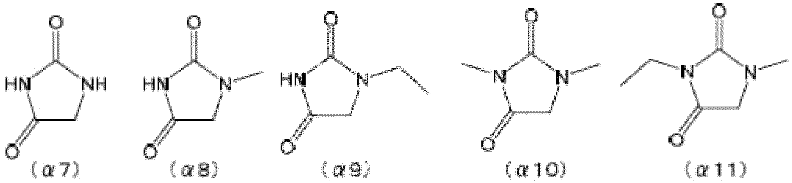

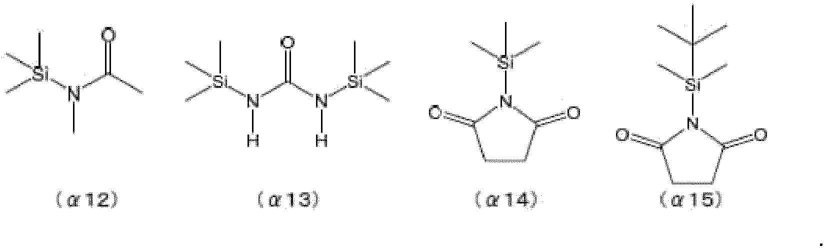

2. The nonaqueous electrolytic solution according to claim 1, wherein the content of the compound represented by General Formula (A) is 1.0 × 10⁻³% by mass or more and 10% by mass or less relative to the total amount of the nonaqueous electrolytic solution.

3. The nonaqueous electrolytic solution according to claim 1 or 2, wherein the content of the compound represented by General Formula (α) or the compound represented by General Formula (β) is 0.01 mass ppm or more and 0.5% by mass or less relative to the total amount of the nonaqueous electrolytic solution.

4. The nonaqueous electrolytic solution according to any one of claims 1 to 3, wherein the mass ratio of the content of the compound represented by General Formula (A) to the content of the compound represented by General Formula (α) or the compound represented by General Formula (β) in the nonaqueous electrolytic solution is 1.0 or more and 1.0 × 10⁴ or less.

5. A nonaqueous electrolytic solution for a nonaqueous electrolytic solution battery including a positive electrode and a negative electrode which are capable of absorbing and releasing metal ions, the nonaqueous electrolytic solution comprising an alkali metal salt, a nonaqueous solvent, a compound represented by General Formula (AA), and a compound represented by General Formula (αα): 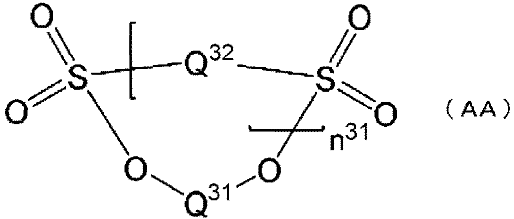 where in General Formula (AA),
Q³¹ and Q³² each independently represent a C₁ to C₁₀ alkylene group; the alkylene group may be substituted by a hydrocarbon group, or a hydrogen atom of the alkylene group may be substituted by a halogen atom;
n³¹ is an integer of 0 or 1; and when n³¹ is 0, the sulfur atom and the oxygen atom are directly bonded to each other; 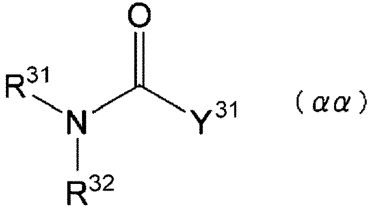 where in General Formula (αα),
R³¹ and R³² each independently represent a hydrogen atom, a C₁ to C₁₂ hydrocarbon group, or a silyl group represented by -SiR³³R³⁴R³⁵;
R³³ to R³⁵ each independently represent a hydrogen atom, a halogen atom, a C₁ to C₁₂ hydrocarbon group which may have a substituent, or a C₁ to C₁₂ alkoxy group which may have a substituent;
Y³¹ represents a C₁ to C₁₂ alkoxy group which may have a substituent; and
R³¹ or R³² and Y³¹ may be bonded to each other to form a ring;
wherein the content of the compound represented by General Formula (αα) is 0.01 mass ppm or more and 0.5% by mass or less relative to the total amount of the nonaqueous electrolytic solution, and
the mass ratio of the content of the compound represented by General Formula (AA) to the content of the compound represented by General Formula (αα) in the nonaqueous electrolytic solution is 2.0 or more and 1.0 × 10⁴ or less.

6. The nonaqueous electrolytic solution according to claim 5, wherein the content of the compound represented by General Formula (AA) is 1.0 × 10⁻³% by mass or more and 10% by mass or less relative to the total amount of the nonaqueous electrolytic solution.

7. A nonaqueous electrolytic solution battery including a positive electrode and a negative electrode which are capable of absorbing and releasing metal ions, and a nonaqueous electrolytic solution, wherein the nonaqueous electrolytic solution is the nonaqueous electrolytic solution according to any one of claims 1 to 6.

## Patentansprüche

1. Eine nichtwässrige Elektrolytlösung für eine Batterie mit nichtwässriger Elektrolytlösung, die eine positive Elektrode und eine negative Elektrode beinhaltet, die in der Lage sind, Metallionen zu absorbieren und freizusetzen, wobei die nichtwässrige Elektrolytlösung ein Alkalimetallsalz, ein nichtwässriges Lösungsmittel, eine durch allgemeine Formel (A) dargestellte Verbindung und mindestens eine aus einer durch allgemeine Formel (α) dargestellten Verbindung und einer durch allgemeine Formel (β) dargestellten Verbindung umfasst,
wobei die durch allgemeine Formel (α) dargestellte Verbindung mindestens eine Verbindung, ausgewählt aus der Gruppe bestehend aus durch Formeln (α1) bis (α15) dargestellten Verbindungen, ist: 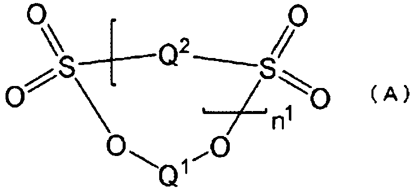 wobei in allgemeiner Formel (A),
Q¹ und Q² jeweils unabhängig eine C₁- bis C₁₀-Alkylengruppe, die einen Substituenten aufweisen kann, darstellen;
n¹ eine ganze Zahl von 0 oder 1 darstellt; und wenn n¹ gleich 0 ist, das Schwefelatom und das Sauerstoffatom direkt aneinandergebunden sind; 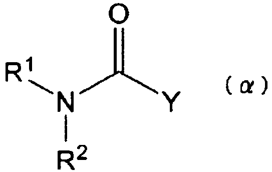 wobei in allgemeiner Formel (α),
R¹ und R² jeweils unabhängig ein Wasserstoffatom, eine C₁- bis C₁₂-Kohlenwasserstoffgruppe oder eine durch -SiR³R⁴R⁵ dargestellte Silylgruppe darstellen;
R³ bis R⁵ jeweils unabhängig ein Wasserstoffatom, ein Halogenatom, eine C₁- bis C₁₂-Kohlenwasserstoffgruppe, die einen Substituenten aufweisen kann, oder eine C₁- bis C₁₂-Alkoxygruppe, die einen Substituenten aufweisen kann, darstellen;
Y ein Wasserstoffatom, ein Halogenatom, eine C₁- bis C₁₂-Kohlenwasserstoffgruppe, die einen Substituenten aufweisen kann, eine durch -NR⁶-SiR⁷R⁸R⁹ dargestellte Gruppe oder eine durch -NR¹⁰-R¹¹ dargestellte Gruppe darstellt;
R⁶, R¹⁰ und R¹¹ jeweils unabhängig ein Wasserstoffatom oder eine C₁- bis C₁₂-Kohlenwasserstoffgruppe, die einen Substituenten aufweisen kann, darstellen;
R⁷ bis R⁹ jeweils unabhängig ein Wasserstoffatom, ein Halogenatom, eine C₁- bis C₁₂-Kohlenwasserstoffgruppe, die einen Substituenten aufweisen kann, oder eine C₁- bis C₁₂-Alkoxygruppe, die einen Substituenten aufweisen kann, darstellen; und
R¹ oder R² und Y aneinandergebunden sein können, um einen Ring zu bilden; 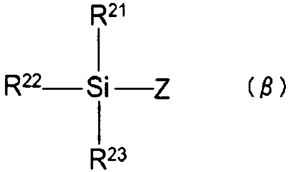 wobei in allgemeiner Formel (β),
R²¹ bis R²³ jeweils unabhängig ein Wasserstoffatom, eine C₁- bis C₁₀-Alkylgruppe, die einen Substituenten aufweisen kann, eine C₆- bis C₁₈-Arylgruppe oder eine C₇- bis C₁₈-Aralkylgruppe darstellen; und
Z eine C₂- bis C₁₀-Alkenyl- oder Alkinylgruppe, die einen Substituenten aufweisen kann, darstellt;

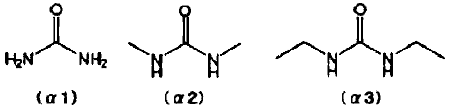

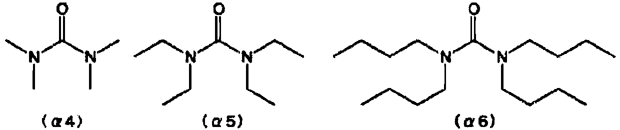

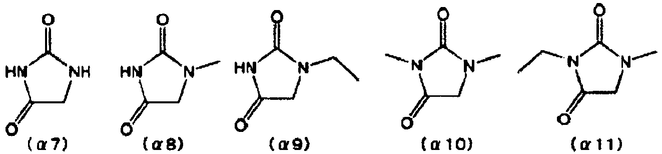

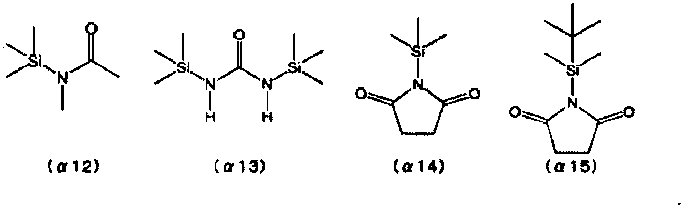

2. Die nichtwässrige Elektrolytlösung nach Anspruch 1, wobei der Gehalt der durch allgemeine Formel (A) dargestellten Verbindung 1,0 × 10⁻³ Massen-% oder mehr und 10 Massen-% oder weniger, bezogen auf die Gesamtmenge der nichtwässrigen Elektrolytlösung, beträgt.

3. Die nichtwässrige Elektrolytlösung nach Anspruch 1 oder 2, wobei der Gehalt der durch allgemeine Formel (α) dargestellten Verbindung oder der durch allgemeine Formel (β) dargestellten Verbindung 0,01 Massen-ppm oder mehr und 0,5 Massen-% oder weniger, bezogen auf die Gesamtmenge der nichtwässrigen Elektrolytlösung, beträgt.

4. Die nichtwässrige Elektrolytlösung nach einem der Ansprüche 1 bis 3, wobei das Massenverhältnis des Gehalts der durch allgemeine Formel (A) dargestellten Verbindung zu dem Gehalt der durch allgemeine Formel (α) dargestellten Verbindung oder der durch allgemeine Formel (β) dargestellten Verbindung in der nichtwässrigen Elektrolytlösung 1,0 oder mehr und 1,0 × 10⁴ oder weniger beträgt.

5. Eine nichtwässrige Elektrolytlösung für eine Batterie mit nichtwässriger Elektrolytlösung, die eine positive Elektrode und eine negative Elektrode beinhaltet, die in der Lage sind, Metallionen zu absorbieren und freizusetzen, wobei die nichtwässrige Elektrolytlösung ein Alkalimetallsalz, ein nichtwässriges Lösungsmittel, eine durch allgemeine Formel (AA) dargestellte Verbindung und eine durch allgemeine Formel (αα) dargestellte Verbindung umfasst: 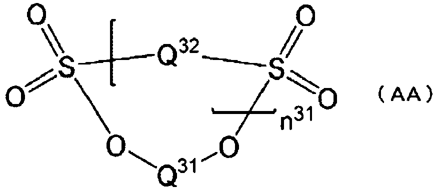 wobei in allgemeiner Formel (AA)
Q³¹ und Q³² jeweils unabhängig eine C₁- bis C₁₀-Alkylengruppe darstellen; die Alkylengruppe durch eine Kohlenwasserstoffgruppe substituiert sein kann oder ein Wasserstoffatom der Alkylengruppe durch ein Halogenatom substituiert sein kann;
n³¹ eine ganze Zahl von 0 oder 1 ist; und wenn n³¹ gleich 0 ist, das Schwefelatom und das Sauerstoffatom direkt aneinandergebunden sind; 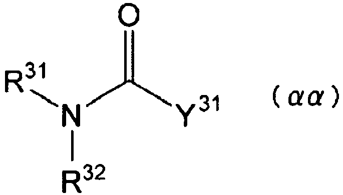 wobei in allgemeiner Formel (αα),
R³¹ und R³² jeweils unabhängig ein Wasserstoffatom, eine C₁- bis C₁₂-Kohlenwasserstoffgruppe oder eine durch -SiR³³R³⁴R³⁵ dargestellte Silylgruppe darstellen;
R³³ bis R³⁵ jeweils unabhängig ein Wasserstoffatom, ein Halogenatom, eine C₁- bis C₁₂-Kohlenwasserstoffgruppe, die einen Substituenten aufweisen kann, oder eine C₁- bis C₁₂-Alkoxygruppe, die einen Substituenten aufweisen kann, darstellen;
Y³¹ eine C₁- bis C₁₂-Alkoxygruppe, die einen Substituenten aufweisen kann, darstellt; und
R³¹ oder R³² und Y³¹ aneinandergebunden sein können, um einen Ring zu bilden;
wobei der Gehalt der durch allgemeine Formel (αα) dargestellten Verbindung 0,01 Massen-ppm oder mehr und 0,5 Massen-% oder weniger, bezogen auf die Gesamtmenge der nichtwässrigen Elektrolytlösung, beträgt, und
das Massenverhältnis des Gehalts der durch allgemeine Formel (AA) dargestellten Verbindung zu dem Gehalt der durch allgemeine Formel (αα) dargestellten Verbindung in der nichtwässrigen Elektrolytlösung 2,0 oder mehr und 1,0 × 10⁴ oder weniger beträgt.

6. Die nichtwässrige Elektrolytlösung nach Anspruch 5, wobei der Gehalt der durch allgemeine Formel (AA) dargestellten Verbindung 1,0 × 10⁻³ Massen-% oder mehr und 10 Massen-% oder weniger, bezogen auf die Gesamtmenge der nichtwässrigen Elektrolytlösung, beträgt.

7. Eine Batterie mit nichtwässriger Elektrolytlösung, die eine positive Elektrode und eine negative Elektrode, die in der Lage sind, Metallionen zu absorbieren und freizusetzen, und eine nichtwässrige Elektrolytlösung beinhaltet, wobei die nichtwässrige Elektrolytlösung die nichtwässrige Elektrolytlösung nach einem der Ansprüche 1 bis 6 ist.

## Revendications

1. Solution électrolytique non aqueuse pour une batterie à solution électrolytique non aqueuse incluant une électrode positive et une électrode négative qui sont capables d'absorber et de libérer des ions métalliques, la solution électrolytique non aqueuse comprenant un sel de métal alcalin, un solvant non aqueux, un composé représenté par la Formule Générale (A), et au moins l'un parmi un composé représenté par la Formule Générale (α) et un composé représenté par la Formule Générale (β),
dans laquelle le composé représenté par la Formule Générale (α) est au moins un composé choisi dans le groupe constitué par les composés représentés par les formules (α1) à (α15) : 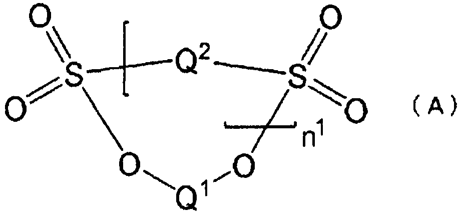 où, dans la Formule Générale (A),
chacun de Q¹ et Q² représente indépendamment un groupe alkylène en C₁ à C₁₀ qui peut porter un substituant ;
n¹ représente un entier 0 ou 1 ; et quand n¹ vaut 0, l'atome de soufre et l'atome d'oxygène sont directement liés l'un à l'autre ; 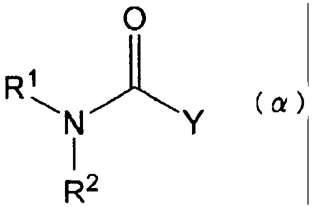 où, dans la Formule Générale (α),
chacun de R¹ et R² représente indépendamment un atome d'hydrogène, un groupe hydrocarboné en C₁ à C₁₂, ou un groupe silyle représenté par -SiR³R⁴R⁵ ;
chacun de R³ à R⁵ représente indépendamment un atome d'hydrogène, un atome d'halogène, un groupe hydrocarboné en C₁ à C₁₂ qui peut porter un substituant, ou un groupe alcoxy en C₁ à C₁₂ qui peut porter un substituant ;
Y représente un atome d'hydrogène, un atome d'halogène, un groupe hydrocarboné en C₁ à C₁₂ qui peut porter un substituant, un groupe représenté par -NR⁶-SiR⁷R⁸R⁹, ou un groupe représenté par -NR¹⁰-R¹¹ ;
chacun de R⁶, R¹⁰ et R¹¹ représente indépendamment un atome d'hydrogène ou un groupe hydrocarboné en C₁ à C₁₂ qui peut porter un substituant ;
chacun de R⁷ à R⁹ représente indépendamment un atome d'hydrogène, un atome d'halogène, un groupe hydrocarboné en C₁ à C₁₂ qui peut porter un substituant, ou un groupe alcoxy en C₁ à C₁₂ qui peut porter un substituant ; et
R¹ ou R² et Y peuvent être liés l'un à l'autre pour former un cycle ; 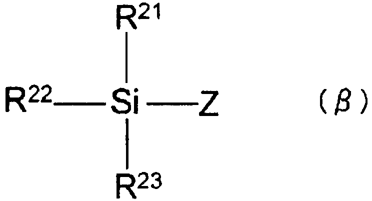 où, dans la Formule Générale (β),
chacun de R²¹ à R²³ représente indépendamment un atome d'hydrogène, un groupe alkyle en C₁ à C₁₀ qui peut porter un substituant, un groupe aryle en C₆ à C₁₈, ou un groupe aralkyle en C₇ à C₁₈ ; et
Z représente un groupe alcynyle ou alcényle en C₂ à C₁₀ qui peut porter un substituant ;

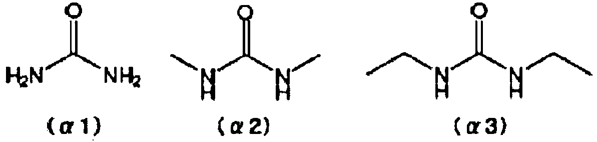

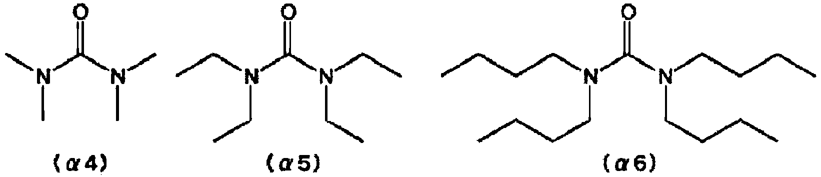

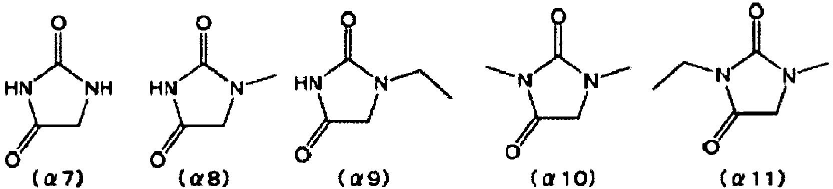

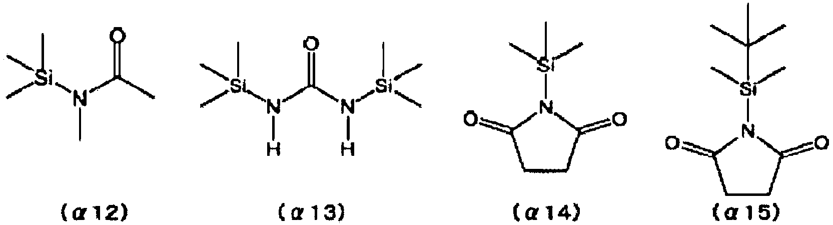

2. Solution électrolytique non aqueuse selon la revendication 1, dans laquelle la teneur en composé représenté par la Formule Générale (A) est de 1,0 × 10⁻³ % en masse ou plus et 10 % en masse ou moins par rapport à la quantité totale de la solution électrolytique non aqueuse.

3. Solution électrolytique non aqueuse selon la revendication 1 ou 2, dans laquelle la teneur en composé représenté par la Formule Générale (α) ou en composé représenté par la Formule Générale (β) est de 0,01 ppm en masse ou plus et 0,5 % en masse ou moins par rapport à la quantité totale de la solution électrolytique non aqueuse.

4. Solution électrolytique non aqueuse selon l'une quelconque des revendications 1 à 3, dans laquelle le rapport en masse de la teneur en composé représenté par la Formule Générale (A) à la teneur en composé représenté par la Formule Générale (α) ou en composé représenté par la Formule Générale (β) dans la solution électrolytique non aqueuse est de 1,0 ou plus et 1,0 × 10⁴ ou moins.

5. Solution électrolytique non aqueuse pour une batterie à solution électrolytique non aqueuse incluant une électrode positive et une électrode négative qui sont capables d'absorber et de libérer des ions métalliques, la solution électrolytique non aqueuse comprenant un sel de métal alcalin, un solvant non aqueux, un composé représenté par la Formule Générale (AA), et un composé représenté par la Formule Générale (αα) : 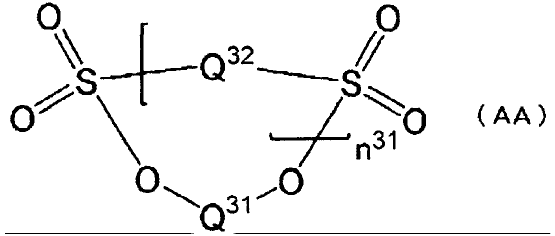 où, dans la Formule Générale (AA),
chacun de Q³¹ et Q³² représente indépendamment un groupe alkylène en C₁ à C₁₀ ; le groupe alkylène peut être substitué par un groupe hydrocarboné, ou un atome d'hydrogène du groupe alkylène peut être remplacé par un atome d'halogène ;
n³¹ est un 'entier valant 0 ou 1 ; et quand n³¹ vaut 0, l'atome de soufre et l'atome d'oxygène sont directement liés l'un à l'autre ; 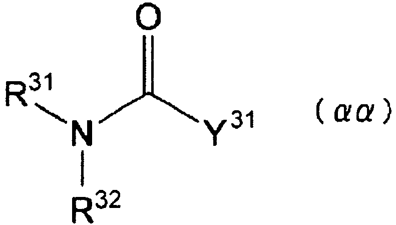 où, dans la Formule Générale (αα),
chacun de R³¹ et R³² représente indépendamment un atome d'hydrogène, un groupe hydrocarboné en C₁ à C₁₂, ou un groupe silyle représenté par -SiR³³R³⁴R³⁵ ;
chacun de R³³ à R³⁵ représente indépendamment un atome d'hydrogène, un atome d'halogène, un groupe hydrocarboné en C₁ à C₁₂ qui peut porter un substituant, ou un groupe alcoxy en C₁ à C₁₂ qui peut porter un substituant ;
Y³¹ représente un groupe alcoxy en C₁ à C₁₂ qui peut porter un substituant ; et
R³¹ ou R³² et Y³¹ peuvent être liés l'un à l'autre pour former un cycle ;
dans laquelle la teneur en composé représenté par la Formule Générale (αα) est de 0,01 ppm en masse ou plus et 0,5 % en masse ou moins par rapport à la quantité totale de la solution électrolytique non aqueuse, et
le rapport en masse de la teneur en composé représenté par la Formule Générale (AA) à la teneur en composé représenté par la Formule Générale (αα) dans la solution électrolytique non aqueuse est de 2,0 ou plus et 1,0 × 10⁴ ou moins.

6. Solution électrolytique non aqueuse selon la revendication 5, dans laquelle la teneur en composé représenté par la Formule Générale (AA) est de 1,0 × 10⁻³ % en masse ou plus et 10 % en masse ou moins par rapport à la quantité totale de la solution électrolytique non aqueuse.

7. Batterie à solution électrolytique non aqueuse incluant une électrode positive et une électrode négative qui sont capables d'absorber et de libérer des ions métalliques, et une solution électrolytique non aqueuse, dans laquelle la solution électrolytique non aqueuse est la solution électrolytique non aqueuse de l'une quelconque des revendications 1 à 6.
